# EUROPEAN PATENT APPLICATION

(11) **EP 4 693 154 A1**
(43) Date of publication of application: **11.02.2026**
(21) Application number: 24193327.4
(22) Date of filing: 07.08.2024
(51) Int. Cl.: G06Q 40/06, G06Q 40/08, G06Q 40/12

(54) **SYSTEMS AND METHODS FOR FINANCIAL RISK MANAGEMENT**

(71) Applicant: Simarmata, Giorevinus M.P.H., 3544 NA Utrecht (NL)
(72) Inventor: Simarmata, Giorevinus M.P.H., 3544 NA Utrecht (NL)

(57) **Abstract**

The present invention relates to systems and methods for Financial Risk Management (FRM), covering Market Risk, Credit Risk, and Liquidity Risk. A data model will determine the relationship and arrangement between FRM data entities. A computing program may determine what are the cashflows and related risks, to support various FRM activities, as well as data aggregation to allow aggregated view of information. For organizations in general, the disclosure is designed to support accounting standard development, e.g. IFRS (International Financial Reporting Standards). For regulated industries (banking and insurance), the present disclosure provides data management framework required to support compliance with Basel III framework for banking or Solvency II framework for insurance, in particular with RWA (Risk Weighted Asset) based regulatory capital calculation based on Basel (banks) or Solvency (insurance), and supervisory exercises, such as ICAAP (Internal Capital Adequacy Assessment Process) and ORSA (Own Risk and Solvency Assessment).

## Description

Financial management is a critical component of any organization, as it involves planning, organizing, and controlling financial resources to achieve business objective. Effective financial management is essential to maximize shareholder value while minimizing risk. Risk is generally defined as the negative effect of uncertainty on objectives and managed under Financial Risk Management (FRM) as sub-discipline of financial management. Under today's dynamic business environment, new risks and opportunities emerge, therefore FRM is an ongoing process that helps organizations to protect their assets, optimize returns on investments, and make informed business decisions.

With multitude of risks inherent in any organization activities, academics and professionals in risk management field categorize financial risks based on their natural characteristics, with Market Risk (MR), Credit Risk (CR), and Liquidity Risk (LR) are the most commonly known under FRM scope of activities. The three categories are defined as follows:
1. Market risk refers to the potential loss resulting from fluctuations in asset prices due to changes in market conditions. Market risk includes risks arising from interest rate risk, equity risk, foreign exchange risk, commodity risk, and credit spread risk.
2. Credit risk is the potential loss resulting from a borrower's failure to repay a loan or meet contractual obligations, ones with positive exposures or cashflows that due to receive. Credit risk is measured by taking into account factors such as probability of default, loss given default, and exposure at default.
3. Liquidity risk refers to the potential difficulty an organization may face in meeting its short-term financial obligations due to an inability to convert assets into cash without incurring a substantial loss, commonly examined using Liquidity Gap analysis.

Traditional FRM approaches rely on a range of tools and techniques, including risk assessment frameworks, risk matrices, sensitivity analysis, scenario analysis, statistical or probability methodology, and Monte Carlo simulation. On top of it, organizations often employ hedging, diversification, asset allocation, and risk transfer strategies to mitigate risk. However, the evolving market and business landscape necessitate a more nuanced approach to FRM. There is a growing need to move beyond high-level risk management to focus more on more granular information, to allow deep-dive data analysis and enabling more precise and effective risk assessment and mitigation strategies. Only by understanding and mitigating risks in more details, organizations can improve on minimize potential losses, enhance their reputation, and meet the organization goals. Left unmanaged, these risks can have a significant impact on an organization's financial performance, and if not managed effectively, can lead to financial losses, damage to reputation, and even bankruptcy when extreme volatility hits the market and economy. In this context, it is clear correctly implemented FRM benefits beyond financial sector, as non-financial organizations may also leverage from FRM to meet their goals.

Adopting an integrated FRM approach is not an easy feat, as it necessitates to properly see both risk in organizational-level and each risk category as part of the organizational core activities, in midst of dynamics business environment that may change abruptly. Unfortunately, decades long dichotomy between MR, CR, and LR-only systems lead to silo-based internal systems, thus data repositories. Many eventually rely on manual intervention and data aggregation (e.g. using spreadsheets), leading to unclear and frequently messy arrangement as data lineage is no longer transparent and reflecting tangled data flow, some situations even lead to audit findings due to unreconcilable financial figures between the systems.

The situation is more urgent for regulated industries (e.g. banking and insurance), as since the latest Basel III and Solvency II frameworks demand higher standards of reporting leading to a more complex data flow, while supervisors (e.g. EBA, European Banking Authority) obliged for better data management. For non-regulated corporates, FRM related data is also required related to accounting standards (IFRS), in particular IFRS 7 (Disclosures), IFRS 9 (Financial Instruments), and IFRS 13 (Fair Value Measurement), where all MR, CR, and LR related information is required. The aftermath of the 2008 Global Financial Crisis (GFC) also gave birth to new hybrid risk metrics, combining Market Risk (MR) and Credit Risk (CR) parameters, such as XVA (Various Value Adjustment) and CCR (Counterparty Credit Risk), which have been incorporated into various standards, including IFRS, Basel, and Solvency, further marginalizing silo-based design. ISDA (International Swaps and Derivatives Association) also published SIMM (Standard Initial Margin Model), recommended to be applied on derivatives trades using ISDA, which based on netting set and collateral set information, further pushing the irrelevance of asset-based silo approach. Therefore, an optimum and versatile data model, systems, and methods for various risk data is essential to address the situation's concerns, for both financial and non-financial organizations alike.

### Summary

Top level FRM information is required before an organization made important business decisions, e.g. entering new business, risk hedging, or placing investment. From short-term (daily) to long-term (decades) time horizon decisions, FRM objective is to ensure the organization risk exposures are well managed, avoiding unnecessary risk taking that may jeopardize the organization goals. However, in order to choose the right course of action, FRM requires top notch data management capability to access not only the aggregated or top-level, but also granular enough in order to deep-dive into any risk details across organization. This requires a new data model that allow clear and transparent data lineage from the source data up to the top-level information, plus systems and methods based on the data model that can support all FRM activities requirements.

Decades-long thinking of financial products that used to be solely market risk-only products or credit risk-only products have given birth to numerous FRM systems built within this software design paradigm. The situation leads to manual intervention and data aggregation that has led various past operational incidents, even to audit or regulatory findings. This can only be avoided by breaking down silo-based views and implementing systems and methods that can support a wide range of financial instruments. The present invention brings FRM-relevant information in cashflow level as data building blocks, to allow seamless integration among the components into top-level organization view while keeping data lineage intact. Those skilled in the art may notice that this innovative is new and such feature will be greatly appreciated

Aside from simplicity and agility, the present invention allows the use of a single software to replace other software, which designed to handle only a specific asset class or business lines, further optimizing not only system architecture and operations, but also hefty subscription and maintenance costs. Additionally, due to the complexity of financial mathematics or probabilistic/statistics approach, FRM is subject to validation by external auditors or experts, therefore a single software to handle the calculation will definitely reduce numbers of validation required, at least for calculation of Future Value (FV), Present Value (PV), MR, CR, LR of vanilla financial instruments.

Focusing on cashflows of all possible financial instruments within the scope of FRM, the invention's systems and methods presented herein consists of: data model, data entities relationship diagram, data collection methods, cashflow generator method, cashflow category segregation method, calculation and determination method for FV, PV, MR, CR, LR properties of cashflow, metrics data aggregation method, sensitivity/scenario analysis method using aggregated data.

In the presented invention, a new data model is introduced that contains following data entities: Cashflow, Financial Instrument, Trade, Netting Set, Counterparty, Collateral Set, Collateral Post, Market Data, and Credit Data. Based on latest financial instrument mechanism standard, relationship between data entities can be established as a new data model as part of the present invention. Methods presented in the innovation are based on this new data model.

The present invention includes method to derive Financial Instrument entity into its corresponding Cashflow entity, from the referred financial instrument's cashflow schedule into cashflow(s) with three basic dimensions: currency, amount or future value (FV), and time to maturity/settlement. A method is also presented to categorize what type of cashflow based on its payoff function, inherited from Financial Instrument Base/Static information as described in its contractual details, necessary to derive cashflow's PV and MR related attributes.

To include CR related attributes, the present invention introduces a method to include Counterparty entity information into corresponding Cashflow entity properties, which are counterparty, netting set, and collateral set details into the cashflows.

Methods to calculate and/or include Cashflow's Derived data (PV, MR, and CR data) based on reference data, represented by Market Data and Credit Data entities, are also presented in the disclosure, based on standard financial mathematics formula. PV calculation by means of discounting methodology will be mostly used, otherwise a non-linear option valuation methodology will need to be applied that may involve probabilistic quantitative models and numerical methods. MR derived data will contain common market risk metrics: Delta, Vega, Gamma, PV01, and Convexity, to measure market dynamics impact on the cashflow. CR derived data will contain common credit risk metrics: Probability of Default (PD), Loss Given Default (LGD), Expected Loss (EL), Days Past Due (DPD), to measure the ability of counterparty to meet its obligation or how much expected loss under default event. Those skilled in the art will appreciate that such a representation of these properties is unconventional, yet it may enable innovative approaches to FRM activities.

The present disclosure also introduces a metrics aggregation method, allowing higher-level representation according to the disclosed data model hierarchy: Financial Instrument, Trade, Netting Set, Collateral Post, Collateral Set, Counterparty, and top-view or Organization level. The relevancy of such aggregated information lies in supporting various activities, including: Netting Set aggregation for netting activities, Collateral Set aggregation for collateral management activities, Counterparty aggregation for CR-wide activities, and Organization aggregation for organization-wide FRM and regulatory capital requirements for regulated industries.

Finally, a sensitivity/scenario risk analysis aggregation method is presented how to collect aggregated metrics from relevant data entities in combination with corresponding market data and/or credit data, which are important to perform calculation by means of sensitivity and/or scenario risk analysis, under the present invention systems and methods arrangement. Following use cases are presented in this invention: Value-at-Risk (VaR), Expected Shortfall (ES), Counterparty Credit Risk (CCR), Various Value Adjustment (XVA), Basel's RWA, and Basel's ICAAP, in which Solvency's SCR and Solvency's ORCA shares many similar methodologies.

### Brief Description of the Drawings

The present invention may take physical form in certain parts and steps, embodiments of which will be described in detail in the following description and illustrated in the accompanying drawings that form a part hereof, wherein:
- Figure 1 shows illustrative network environment and a portion of an illustrative system for implementing FRM systems and methods according to at least some embodiments;
- Figure 2 shows data entities hierarchy of the invention's data model;
- Figure 3 shows data model diagram to illustrate relationships between data entities;
- Figure 4 shows illustrative flow diagram in data entity representation for new trade entry processing, including processing of associated financial instruments and cashflows;
- Figure 5 shows illustrative flow diagram in data entity representation for new collateral post processing including processing of associated financial instruments and cashflows;
- Figure 6 shows illustrative flow diagram in data entity representation for new market data entry and calculation of MR, CR, and PV attribute processing of cashflows;
- Figure 7 shows a diagram of cashflow data entity and its associated MR and CR derived data;
- Figure 8 shows financial mathematics formula relevant to the calculation of MR derived data properties of cashflow data entity;
- Figure 9 shows financial mathematics formula relevant to the calculation of CR derived data properties of cashflow data entity;
- Figure 10 a diagram of aggregate data entity and its associated MR, LR, and CR derived data, representing netting set, collateral set, counterparty, and organization data entities;
- Figure 11 shows financial mathematics formula relevant to the aggregation of MR and CR derived data properties of aggregate data entity;

### Detailed Description

Currently, cashflow information is delivered by systems responsible for storing trade and financial instrument physical data, mostly limited to basic LR derived data (e.g. currency, amount of cash, and settlement date or period). PV, MR, and CR data are not available in cashflow level and only in financial instrument level most of the time. The situation is mostly attributed to current or traditional practice of financial instruments categorization to either only MR or CR applies, along with allocation of MR and CR attributes to solely financial instruments, and only LR attributes apply to cashflows. As most FRM methods and systems were launched pre-GFC 2008, the massive interlinked between MR, CR, and LR never considered important enough to be included in initial software design, to even consider MR, CR, and LR inherent attributes in cashflows. This has created difficulties for FRM to assess cashflow-based scenario and link the analysis back into the big picture, leading into massive amounts of inefficiencies from tedious labor works in form of spreadsheet-based data aggregation and mapping around the world.

Cashflow's multiple dimensions of currency, settlement/maturity time, and amount/FV information is normally expressed in matrix representation as shown in Table 1, with FV represented in millions of shown currencies (US Dollars and Euro). This table is also usually referred to as Liquidity Gap table, or a table consisting total cashflows amount/FV, presented in cells having its row corresponding to the cashflow currency as shown on the left-most column and its column corresponding to the cashflow's settlement/maturity time grouped into corresponding time bucket.

Time bucket approach is normally used to reduce too much granularity as in reality contractual settlement/maturity of cashflow is stated in date. The cells of the top row reflect time buckets chosen to report the Liquidity Gap, relative to present time. O/N column stands for overnight, representing current cash balance that will be hold by the organization overnight. The "d", "m", and "y" abbreviations stand for "day", "month", and "year". Time bucket 7d represents sum of cashflow FVs that will be paid or received between tomorrow and 7 days from now, 14d represents between 7 days and 14 days from now, 1m represents between 1 month and 3 months from now, and so forth. In the end of the columns, we see the total amount of cashflows, grouped by corresponding cashflows currency as shown in the left-most column.

**Table 1**

| **Currency** | **O/N** | **7d** | **14d** | **1m** | **3m** | **6m** | **1y** | **2y** | **5y** | **Total** |
|---|---|---|---|---|---|---|---|---|---|---|
| **EUR** | 10 | 30 | -30 | 180 | -200 | 100 | 20 | 150 | -100 | 70 |
| **USD** | 30 | -20 | 50 | -100 | -20 | 10 | 10 | 0 | 10 | -30 |

Consider an organization exposed to crude oil price movement in this example, e.g. oil trader. The cell under EUR row and 1y column (or EUR 1y bucket) states FV as 20, which means between 6 months and 1 year from now, the organization is expected to receive a total amount of 20 million Euro. While for the cell under USD row and 3m column (or USD 3m bucket) stating -100, the organization is expected to pay a total amount of -100 million US Dollars between 14 days and 1 month from now. In this situation, the organization needs to pay attention, as when we consider the previous buckets under USD, the accumulated amount of cashflows, including the USD cash balance under USD row and O/N column, the organization will not have sufficient cash balance to meet its obligations as between 14 days and 1 month from now, as these buckets are all offset to -100 million US Dollars (=30-20+50-100). When the time comes, the organization may be in an illiquid situation if the organization cannot find a way to meet this payment obligations and this is how liquidity risk analysis works.

Consider a scenario where the estimated cashflow amount 14d USD bucket comes from a variable cashflow, in which the cashflow amounts depends on price of Crude Oil. The next day, crude oil price drops by 4% and based on the contractual agreement, the organization will only receive 48 million US Dollars instead of the previous calculation of 50 million US Dollars. The situation will lead into a total amount of -2 million US Dollars (=30-20+50) when we sum from O/N to 14d buckets instead of flat or zero USD cashflow amount, leading to a sudden need for the organization to raise cash sooner than initially expected. This is a liquidity risk, but this time comes from unexpected movement in the market, which is a form of market risk.

In another scenario, consider the EUR 7d bucket where, according to the matrix, expected EUR cash balance by this time should be 40 million Euros (=10+30). Apparently, the counterparty that supposed to pay the 30 million Euro suddenly in financial difficulties, leading to a delay to meet their obligations to transfer the cash to the organization in time. The considered safe bucket of 14d EUR suddenly reported to have -20 million EUR (=10+0-30) instead of the initial estimation of 10 million EUR balance (-10+30-30) at the start of the calculation. This is liquidity risk once again, but triggered from unexpected credit event from the counterparty, which is a form of credit risk.

This example expressed the multi-facet analysis that came along with actual cashflows analysis by professionals and show how the cashflow Liquidity Gap matrix, that commonly used to analyze liquidity risk, on itself is not sufficient enough to adequately explain the underlying risks behind the numbers. The present invention main objective to address these limitations, along with re-organizing how data is managed and processed for a more transparent data lineage, thus data flow.

An organization may enter into or issue a financial contract, also referred as financial instrument. A financial instrument may take various forms, from simple cash instrument, loan/deposit, insurance, equity, bond, commodity, to simple and complex derivatives (e.g. forward, swap, option). However, it is not only limited specifically to banking products, for example accounts receivables or customer warranties may also be considered financial instrument, as the first can be interpreted as a short-term credit facility and the latter as the organization's outstanding obligations toward clients.

A financial instrument may represent one or more cashflow(s), also referred to contractual cashflow(s), defined as certain amount of cash (fixed or variable) that we will receive in the future (predetermined or contingent) as specified in the contractual agreement. The amount is also called as future value (FV) and when valued in present time, the value is referred as present value (PV). A start date and end date are normally reflected in financial instrument contractual document, determining when the instrument takes into effect (live) and when it matures. A time to settlement/maturity is measured as distance in years unit, between present time and the instrument's end date or maturity date. When executing a trade with other entity (e.g. counterparty or exchange), or exchange of financial instrument for another one (e.g. cash), the trading price is expected to be close to the estimated PV. The traded price is referred to market price, and when the set of market prices collected in a historical and structured manner, it constitutes market data.

In common practice, as market price can be estimated using PV, along with its derived MR metrics, this information is generally part of financial instrument attributes. For CR metrics, the information is generally part of counterparty or client attributes. Only LR metrics information is generally attributed to cashflows, despite the fact that MR and CR are inherently reflected in cashflows, as demonstrated in previous example Table 1 illustration. Since it is possible to derive cashflows from financial instruments in general, cashflow data granularity serves as a fundamental building block in the present invention, and thus, the focus of the presented methods and systems.

In generating and collecting cashflow information, the present invention acknowledges 4 cashflow categories determined by its deterministic or random nature over its cashflow FV/amount and time to settlement/maturity dimensions:
1. Cashflow Category 1: Cashflow with fixed FV and fixed time/schedule, where both the payment amount and timing are fixed and certain. Example: fixed rate time deposit product, FX forward.
2. Cashflow Category 2: Cashflow with stochastic FV and fixed time/schedule, where the payment amount is uncertain, but the timing is fixed. Example: variable interest bond, European call option.
3. Cashflow Category 3: Cashflow with fixed FV and stochastic time/schedule, where the payment amount is fixed, but the timing is uncertain. Example: fixed amount insurance product, customer warranty.
4. Cashflow Category 4: Cashflow with stochastic FV and stochastic time/schedule, where both the payment amount and timing are uncertain and subject to random variation. Example: current account and saving account, life insurance.

A method to derive financial instruments into cashflows in this arrangement involves several steps:
1. Determine the number cashflows from financial instrument document. This may be stated simply as number of payments starting from contractual start date. Another way is contractual start date and end date are stated, then the period of payments, for example: monthly or yearly.
2. For each cashflow, determine the cashflow date from financial instrument document. This may be explicitly stated in the cashflow schedule, or derived from given start/end dates and the periodic specification.
3. For each cashflow, determine the cashflow FV from financial instrument document. This may be a combination of fixed and variable nature, in this case fixed FV and variable FV need to be split into two distinct cashflows.
4. For each cashflow, determine the cashflow currency from financial instrument document.
5. If a cashflow has variable FV, the cashflow payoff function and underlying need to be specified as in the financial instrument document.
6. If a cashflow has variable maturity/settlement time, a quantitative analytics or actuarial team has to model the probability distribution of the cashflows, along the contractual time horizon in discretized manner, such as yearly basis cashflows. The output should be in a form of estimated cashflow schedule. When the estimated cashflow schedule is discretized, whether the FV is of fixed or variable, these cashflows may be treated the same way as fixed or variable cashflows with fixed time.

Despite the steps, there are several standard financial instruments that can immediately derived immediately how cashflows would be:
1. Cash is represented as a single cashflow with time to settlement/maturity equal to zero, cashflow's FV/amount is 1, and the cashflow's currency is the cash currency.
2. Zero coupon bond (ZCB) is represented as a single cashflow with time to settlement/maturity is the maturity date of the ZCB relative to present time in years unit. Cashflow's FV is the ZCB face value, usually 100 with cashflow's currency is the ZCB currency.
3. European call option (Call) is represented as a single cashflow with time to settlement/maturity is the maturity date of the Call relative to present time in years unit. Cashflow's FV is the Call face value, usually 100 with cashflow's currency is the Call currency.
4. Fixed interest rate time deposit (Fixed TD) is represented as multiple cashflows, consisting of number of cashflows representing interest payments and principal payment (deposited cash) to be received at maturity. Cashflows' time to maturity/settlement are interest payment dates or maturity date, for the principal, relative to present time in years unit. Interest cashflow's FVs are the interest gained and the principal cashflow's FV is the amount of the deposited cash. Fixed TD cashflows' currency is the deposited cash currency.
5. Variable interest rate time deposit (Variable/Float TD) is represented as multiple cashflows, consisting of number of cashflows representing interest payments and principal payment (deposited cash) to be received at maturity. Cashflows' time to maturity/settlement are interest payment dates or maturity date, for the principal, relative to present time in years unit. Interest cashflows' FVs are the stochastic/variable interest gained and the principal cashflow's FV is the amount of the principal itself. Float TD cashflows' currency is the deposited cash currency.
6. FX spot is represented as two cashflows with time to settlement/maturity equal to zero, where the first cashflow's FV amount is the agreed FX rate and the second cashflow's FV is 1. The first cashflow's currency is the first currency of the FX pair and the second cashflow's currency is the second currency of the FX pair.
7. FX forward is represented as two cashflows with time to settlement/maturity equal to the contractual settlement/maturity date relative to present time in years unit, where the first cashflow's FV amount is the agreed FX rate and the second cashflow's FV is 1. The first cashflow's currency is the first currency of the FX pair and the second cashflow's currency is the second currency of the FX pair.
8. Interest rate swap (IRS) is represented as two series of cashflows, resembling holding two Fixed TD or Float TD depending on the IRS contract specification (fixed-fixed, fixed-float, float-float), where one represents the paying leg and the other the receiving leg, but both without the principal payments in the end, with the same currency.
9. Cross currency swap (CCS) is represented in similar way as IRS' cashflows, except that one cashflows series currency is different than the other one, plus if notional exchange is agreed two set of cashflows resembling FX spot and FX forward are included, with FX forward cashflows equal to the CCS maturity date.
10. Commodity future is represented in similar way as cash' cashflows, but the cashflow's FV equal to the commodity future market price until the maturity date. The moving FV cash behavior is to reflect commodity future price that is always settled in daily basis.
11. Actuarial, Non-Maturity Deposit, and other form of products with non-fixed contractual settlement dates are represented in aggregate manner as a single series of cashflow with monthly or annual time to settlement/maturity. Both the cashflows' time and amount distribution depend on the quantitative of actuarial the organization estimation, with the cashflows' currency is equal to the product's currency. In insurance product, this estimation is commonly known as claim distribution.
12. Account receivables, warranty account, and other form of financial accounts inheriting credit risk or market risk are represented in a similar way as No. 11.

Eventually, there are many possibilities of financial products that cannot be addressed one-by-one, but the twelve cases above should sufficiently explain almost all Financial Instrument derivation into Cashflow as other products may be represented using the mentioned descriptions. For example, bond, deposits, and loans instruments may be represented in a similar way as cases #4 or #5, or a mix of the two in case of a product with fixed interest rate plus float interest rate, represented into two separate cashflows. Similar way for structured deposit with European call option feature, this may be represented as cases #4 or #5, plus series of cashflows representing #3 to reflect European call option payoff feature of the structured deposit coupon. A commodity swap also may be represented in a similar way as #8, with difference in underlying information. Note that for cases No. 11 and No. 12, mathematics model to reflect aggregate manner is reflecting the use law of large number theory in statistics, where the more sample size a statistical or probabilistic problem has, the higher the accuracy. In the case when non-standard specialized product or account required such derivation, an organization may have quantitative analyst or actuarial department that can sufficiently reflect the product in equivalent cashflow(s) representation.

Cashflow with positive FV inherently has credit risk (CR) associated with unsettled incoming cashflow from counterparty or exchange with whom the trade on the financial instrument was executed in the first place. When the trade is done with an exchange, CR is considered almost non-existent given its role as Centralized Counterparty (CCP). However, when the trade is done in a bilateral basis with a non-exchange counterparty, this credit risk exposure is commonly defined as Counterparty Credit Risk (CCR) exposure.

CR can be measured for a cashflow using several metrics, probability of default (PD), loss given default (LGD), and exposure at default (EAD), as input to calculate the expected loss (EL). PD is a statistical/probabilistic measure that a counterparty may fall into default when the organization is still expecting positive cashflow from them. LGD is how much loss may still occur when counterparty defaults despite the recovered amount from the remining positive cashflow, say through legal proceedings. EAD is how much exposure or positive FV that the organization expects from the counterparty. Lastly, EL is the expected loss from the counterpart during the lifetime of the positive cashflow, calculated via multiplication of PD, LGD, and EAD.

In certain FRM standards (e.g. Basel or IFRS), EAD may represent the positive cashflow's PV instead of the cashflow's FV. PD and LGD metrics may be derived from publicly traded financial instrument information and will be called market-implied PD or market-implied LGD, for example from Credit Default Swap (CDS). When such data is not available in the market, the organization may choose to internally model or estimate these parameters using other methodology based on a set of internal data. In both situation, market data or internal data required to derive CR information is referred as credit data.

Days Past Due (DPD) is also a CR metric to record the maximum number of days a counterparty delayed its payment obligation. DPD observation horizon may vary among organizations, but the normal practice is settlement data from last 1 year observation horizon. DPD can be used as an additional input in PD or LGD models by the organization to indicate a rising credit risk from a counterparty. Certain FRM standards (e.g. Basel or IFRS) may require DPD metric monitoring and assign 30 days and 90 days DPD thresholds.

CR mitigation may take several forms, with the most common practices are through netting and collateral exchange or posting. Netting and collateral exchange are normally agreed in bilateral basis and only in effect when such agreement in place, normally within the Credit Support Annex (CSA) section of a Trade Confirmation or Agreement legal document. As such, netting and collateral exchange are becoming more popular lately as risk mitigation tool when CCR is the main focus, but in fact netting procedures and collateral management have been around for decades with residential mortgage is one of the oldest banking products where the property is pledged as collateral.

Netting is the act of grouping several cashflows with same currency and maturity date into one settlement from one or more trades, to avoid incoming and outgoing cashflows between the organization and counterparty/exchange. There are classic FRM cases in the past where an organization went default in between incoming and outgoing cashflows settlement, while the settlement counterparts are still waiting for incoming cashflows to be paid out. Netting is to avoid this scenario to take place and the open cashflows FV are normally grouped or mapped into a netting set, that may represent cashflows from one or multiple different trades under the same netting agreement. In this case, total FV of all cashflows belongs to a netting set is more relevant for netting set information.

Collateral exchange or posting is the act of pledging financial instrument, or asset, to cover the unsettled open exposure from the trading counterpart, thus should only be linked to a netting set, that may also represent a single trade. In the event of the counterparty default, collateral may be sold by the organization to cover the remaining positive FV loss at market price, or PV as the closest estimate. Collateral may take various form, for example in the context of a mortgage loan, the property became the collateral of the financing facility provided by the bank. In another example, collateral may also take the form of a bond, equity/stock, or cash in the most liquid form. Collateral post is the act of pledging or posting financial instrument as collateral, thus the cashflows associated with the posted/pledged financial instrument.

As trades grouped under a netting set, collateral posts also grouped under collateral set, that must be linked to at least one netting set to represent the financial instruments (thus cashflows) underneath to cover the netting set open credit risk exposure. Collateral exchange or posting may take place for more than one time during the lifetime of the open trades of the associated netting set, especially when there is stochastic or variable FV cashflow in the netting set where the amount is subject to underlying price of reference rate. This is also the case with case with collateral with variable FV cashflow as in bond collateral, thus it is important for the organization to be updated with how much is the PV of the received collaterals, especially when market price is not available. This is especially the case when the PV or market price of the financial instrument, thus associated cashflows, can move along with the market conditions, for example government bond. In this case, total PV of all cashflows belongs to a collateral set is more relevant for collateral set information.

As described, the present invention arrangement is flexible to handle wide arrange of product arrangements. An insurance product may be booked as Category 3 or Category 4 cashflows products. A mortgage facility may be booked as Category 1 or Category 2 to reflect the loan product, with underlying property booked under collateral as Category 1 cashflow/asset with market data to update its value in periodic basis, usually in annual basis. A structured finance product may be booked in similar way as mortgage, as Category 1 and/or Category 2 to reflect to loan product with a variable amount component (e.g. IRS or CCS) to reflect the structured payoff, along with collateral as Category 1 cashflow/asset. In case of mortgage or structured finance product, the loan component of the product may be booked under a netting set, with collateral booked under a collateral set, linked to the netting set to reflect the collateral as credit risk mitigation strategy. A prepayment risk of lending products may be booked as Category 4, reflecting optionality to pay the loan in advance, which may be modeled separately in aggregate manner by the organization.

As previously expressed, FV may be of variable nature, that is the future cashflow amount depend on or a function of an underlying value by the settlement/maturity time. In this situation, the organization is exposed to market risk (MR). When an FV is a function of an underlying value, cashflow or the FV itself may be categorized into two distinct categories: linear and non-linear, which reflect the geometrical shape of the function when plotted against the underlying value in a Cartesian graph.

A linear FV function will take a shape of a linear or straight line, while a non-linear FV function otherwise, reflecting a conditional function on the underlying price. This is important to note as the mathematical approach to calculate the cashflow's PV will be very different between the two, linear FV will only use the time value of money (TVM) approach, while for the other it need to use statistical or probabilistic methodology to calculate the cashflow's PV in addition to TVM alone. Computation-wise, linear FV is also easier to calculate as it has closed-form solution to calculate PV and subsequent derivatives, while for non-linear cashflows mostly may require numerical method (e.g. Monte Carlo simulation or finite difference) to calculate PV and subsequent derivatives as closed-form solution does not exist. Such numerical method is outside the disclosure document and subject to the organization discretion on which method to use to calculate.

There are various MR metrics to measure how much MR that the organization is exposed to, among them is Greek or sensitivity. Sensitivity MR measures have several forms, depending on what is the organization focus when conducting FRM on MR category, among them are Delta sensitivity, Gamma sensitivity, and Vega sensitivity. All three sensitivity measures express the magnitude of PV change with respect to the related underlying parameters, calculated using calculus derivative technique. The PV change analysis in sensitivity approach is taking the approach of Taylor expansion with respect to the possible input parameter of the PV, in the context of this disclosure that would be underlying price and the underlying price volatility parameter, that will be relevant only for non-linear cashflows as statistical or probabilistic methodology is required.

Delta sensitivity is the first-order derivative of PV with respect to underlying price, measuring PV change with respect to the underlying price movement in first order manner. Gamma sensitivity is the second-order derivative of PV with respect to underlying price, measuring PV change with respect to the underlying price movement in second order manner. Vega sensitivity is the first-order of PV with respect to underlying price volatility, measuring PV change with respect to the underlying price volatility parameter movement in first order manner. Gamma and Vega sensitivities only apply to non-linear cashflows. Note that the Greek or sensitivity metrics discussed in this disclosure may also be known as Delta Cash, Gamma Cash, and Vega Cash, by having multiplication factor of the contractual principal amount, reflecting nominal amount, notional amount, or contract size amount of the financial instrument. The notion "Cash" is removed from Greek/sensitivities terminologies in this present disclosure for sake of simplicity.

In this Greek/sensitivities definition, Delta or Vega monetary impact due to underlying price or volatility movement is calculated as multiplication Delta/Vega and underlying price/volatility move value, respectively. While for Gamma monetary impact due to underlying price move, it is calculated as multiplication between Gamma and the square of underlying price move value, divided by two. These profit and loss (P&L) impacts commonly referred as Delta P&L, Gamma P&L, and Vega P&L. PV01 P&L and Convexity P&L may also be defined similarly, in a way that PV01 P&L resembling Delta P&L definition and Convexity P&L resembling Gamma P&L definition, in which both PV01 P&L and Convexity P&L refer to P&L impact from movement in corresponding discount rate instead of underlying price.

The P&L impact calculation methodology is an adaptation of Taylor's expansion in Calculus via first- and second-derivatives multiplier, into financial mathematics context. Aside from to estimate and attribute P&L in periodic basis (e.g. daily), P&L impact calculation is used in Greek/sensitivities analysis and scenario analysis to measure the monetary impact from underlying movements, reflecting various economic and market scenarios impact on exposures as reflected by the risk metrics: Delta, Gamma, Vega, PV01, and Convexity, in the present innovation.

Both linear and non-linear cashflows are subject to TVM methodology, or in this context calculating PV by implementing discounting FV operation through discount factor, based on the applied discount rate depending on what currency that the FV will settle, or simply cashflow's currency. The implication is all PV calculation will also require discount rate parameter as its calculation parameter and a change in this parameter will also imply to a change in its PV. There are other sensitivity metrics to measure such change, which are PV01 and Convexity. PV01 is identical to Delta sensitivity and Convexity is identical to Gamma sensitivity, but both metrics are calculated as derivative with respect to the discount rate instead of the underlying, as how Delta and Gamma originally defined.

Due to the characteristics of its payoff function, in most cases, the calculation of the present value (PV) of a non-linear cashflow may not have a closed-form solution. This implies that Greeks such as Delta, Gamma, and Vega, as well as sensitivity measures like PV01 and Convexity, must be approximated using numerical methods, as they are typically derived from first-order and second-order derivatives of the PV. To overcome this situation, the present invention introduces a standard finite difference numerical method to calculate risk metrics for non-linear payoff cashflow.

Delta FV is introduced in this disclosure, which is Delta sensitivity but to measure FV change with respect to underlying instead of PV change. This measure is presented in this disclosure to exclude discount factor to anticipate movement from underlying price. When conditional payoff feature present in FV calculation as in non-linear cashflow, current underlying price will be used as basis to determine which condition applies in the non-linear payoff function. Since the focus is on FV, thus payoff function at maturity based on current price, Delta FV is possible to be calculated for both linear and non-linear financial instruments without the need of numerical methods or the no closed-form limitation.

In data management, the described situation can be summarized in a form of data model, or structured representation of data, including its entities, relationships, constraints, and rules, which is used to organize, manage, and define how data is stored, accessed, and manipulated within a database system. The present invention data model defined the following as data entities: Cashflow, Financial Instrument, Trade, Netting Set, Collateral Post, Collateral Set, Counterparty, Market Data, Credit Data, and Organization. The previously mentioned relationships, constraints, and rules related to these data entities are also incorporated into the present invention's data model. A parent-child data entities hierarchy is presented in this invention to reflect a parent-child relationship between the data entities when exists.

Financial Instrument entity is the parent entity of the Cashflow entity, in which Cashflow Base/Statics Data derived from Financial Instrument Base/Statics Data. Trade entity is the parent entity of Financial Instrument entity, as it represents an exchange of financial instruments (for example bonds for cash). As Trade entity is recorded under Netting Set entity, Netting Set entity is the parent entity of Trade entity, at the same time Netting Set is child entity of Counterparty entity to reflect counterpart of the netting activity.

In the case when collateral exchange taking place, Financial Instrument entity becomes also child entity of Collateral Post entity, reflecting which financial instrument is pledged as collateral. With collateral recorded under collateral set, Collateral Set entity is the parent entity of Collateral Post entity. As with Netting Set entity, Collateral Set entity is child entity of Counterparty entity. As collateral set needs to be associated with the counterparty exposure recorded under netting set, Netting Set entity and Collateral Set entity have many-to-many sibling relationship.

Market Data and Credit Data entities store reference data to perform valuation of present value (PV), MR related calculation, and CR related calculation. In the data model, Market Data entity is a component entity of Financial Instrument entity, as there can be the case where the market data is not associated with financial instrument specifically traded, for example discount interest rate for PV calculation. This is also the case between Credit Data entity and Counterparty entity, where Credit Data entity is the component entity of Counterparty entity, as in the absent of counterparty credit data, another available counterparty credit data may be used as proxy credit data of the required one.

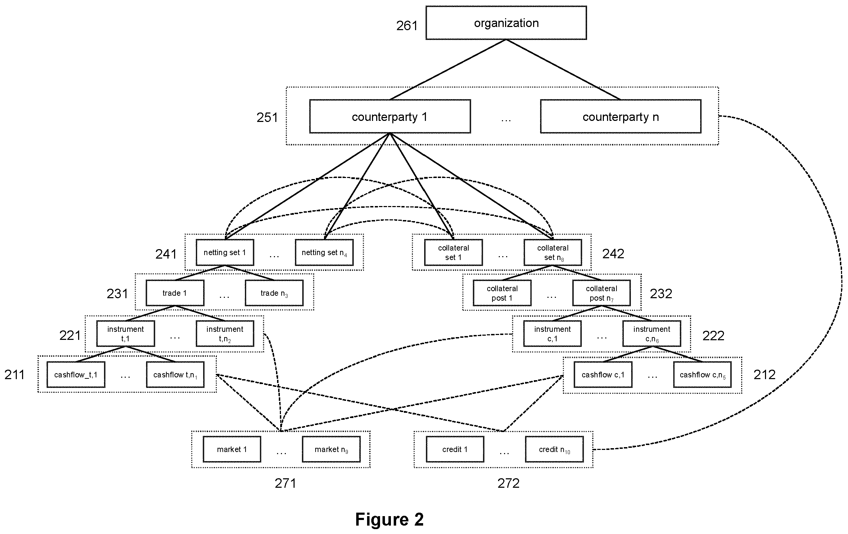

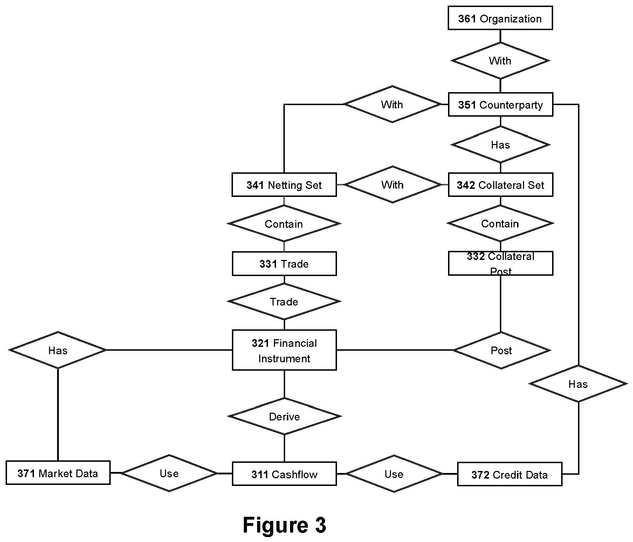

The relationships and hierarchy of the data models are illustrated in Figure 2 and Figure 3. Through data model hierarchy, the present invention introduce method to aggregate cashflows' important numeric properties through sum or max mathematics operator across its corresponding cashflows members. Sum operator is used to aggregate following MR/CR metrics: FV, PV, Delta, Gamma, Vega, PV01, Convexity, Delta FV, EL, Netting Set FV, and Collateral Set PV. While for CR metric DPD, the aggregation is using max operator. All aggregation will take place for all cashflows, with common currency and time bucket mapping allocation.

The simple and direct data flow from the bottom (Cashflow entity) up to the top lovel (Organization entity) will be appreciated by those skilled in the art, as the present invention's systems and methods manage to keep the data lineage clear and transparent. Aggregated information in organization view is very important to be traceable down to the source, reflecting accountability. Organizations use the top-level information not only public disclosures (e.g. annual report), but also minimum capital requirements for regulated industries, such as banks or insurances.

Additionally, with latest development on various regulatory and accounting standards, among those Basel III, Solvency II, and IFRS, various level of aggregation along the data model hierarchy for MR/CR/LR metrics are compulsory to produce the required Greek/sensitivity-based calculation or stress test simulation. Therefore, a method is introduced as part of the invention on how to perform these calculations based on the mentioned present invention's structure of data model, date entities hierarchy, cashflow level information, and information aggregation method.

VaR and ES are based on aggregated information in Trade, Netting Set, Counterparty, or Organization entities. Market Data entity is relevant as input data of the aggregated information underlying (e.g. market prices) for calculation that may use statistics distribution function (probability measure) or Monte Carlo simulation. XVA and CCR are based on aggregated information in Netting Set or Counterparty entities. Market Data and Credit Data entities are relevant as input data of the aggregated information underlying or counterparty (e.g. PD and LGD parameters) for the calculation that may use statistics distribution function (probability measure) or Monte Carlo simulation. RWA and ICAAP are based on aggregated information in Netting Set, Counterparty, or Organization entities. Market Data and Credit Data entities are relevant as input data of the aggregated information underlying or counterparty (e.g. PD and LGD parameters) for the calculation that follow the general rule as described by corresponding regulatory frameworks, Basel or Solvency among others.

### Exemplary Operating environment

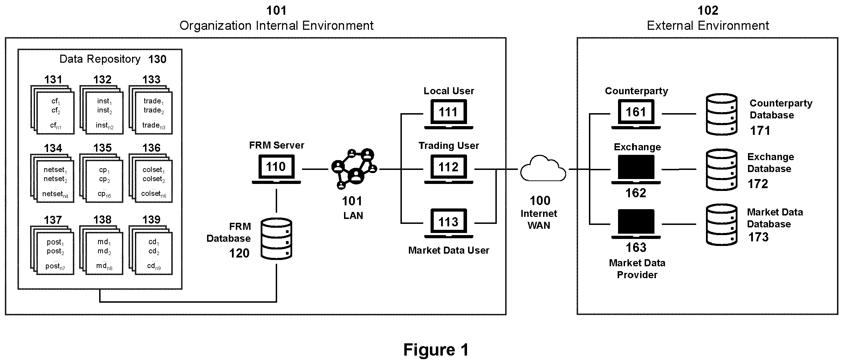

Certain aspects of various embodiments can be realized through computer systems and networks that facilitate the exchange of financial information among users. For example, a financial network environment that supports the implementation of trading systems and methods according to some embodiments is illustrated in Figure 1. The systems and methods described herein can be implemented to facilitate trading and other activities (e.g. retail product management) related to financial products. Inside the Organization Internal Environment 101, computer system 110 acts as FRM Server to perform various FRM procedures (e.g. calculation engine) and store information following certain data model in FRM Database 120. Financial products supported by both server and database include, but not limited to, trading, banking, and insurance products. Among others, some examples are deposits, loans, FX forwards, interest rate swap, commodity future, commodity swap, bonds, equity, equity option, insurance, and account receivables from sales proceeds. For trading products, both exchange-traded and OTC products are supported.

Computer system 110 connects to other computers (111, 112, and 113) within the organization via a Local Area Network (LAN) 101. Computer device 111 represents Local User with no external access, which may represent controller or reporting role in the organization requiring access to FRM database 120 to perform their organizational roles. Computer device 112 represents Trading User with external access to the Counterparty computing system 161 and/or the Exchange computing system 162. Computer device 113 represents Market Data User with external access to the Exchange computing system 162 and/or Market Data Provider computing system 163. Internal computing devices may have other embodiments to register information into the FRM database 120 via electronic interface through FRM server 110 (e.g. Application Programming Interface, or API), in which these embodiments are commonly trading systems used by the organization traders.

In the External Environment 102, Counterparty computing system 161 represents external parties in which the organization has or trade non-exchange financial contract with, e.g. OTC or banking products, where the contract is normally executed in bilateral basis. While Exchange computing system 162 represents financial market exchanges that the organization has or trade listed financial products with, e.g. New York Stock Exchange (NYSE) for stocks or Intercontinental Exchange (ICE) for commodity futures. Computing system 163 represents Market Data Provider, where the organization receives its Market Data or Credit Data from, e.g. Bloomberg or Reuters. All exchange of data communication between the organization and external computing systems (161, 162, and 163) are conducted via Internet or WAN, Wide-Area-Network, (100). In a secured and advanced arrangement, communication between the organization local network computing systems (112 and 113) and external computing systems (161, 162, and 163) may also be done with the presence of external embodiments, such as APIs, communicating with local embodiments (e.g. trading systems).

### Illustrative Embodiments

In addition to record various financial data collected through direct input into computing system 110 or transmitted by other embodiments in computing systems (111, 112, and 113), the computer system 105 is also built to derive, calculate, aggregate, and produce reports to support FRM process. Towards external computing systems 161 and 162, from FRM Server or computing system 110 there may be possible output information be used. One external use example is in netting settlement amounts or collateral exchange with the counterparty, when netting and collateral agreement in place. The agreement between the organization and trading parties, represented by computing devices 161 and 162 in this illustration, is normally set under Credit Support Annex (CSA) of the trade as credit risk mitigation tools. Days Past Due (DPD) information is also derived by computer system 110 as an early warning system for rising default probability or credit event, an insolvent counterparty indicator. DPD records number of days a receivable cashflow left unsettled by related external party according the contractual schedule. Lastly, the connectivity with external computing system 163 provides market data, related to prices or other valuation related parameters, from both MR and CR dimensions.

Inside Data Repository 130 under the FRM Database 120, 9 database tables are located to store following information: cashflows (131), financial instruments (132), trades (133), netting sets (134), counterparties (135), collateral sets (136), collateral posts (137), market data (138), and credit data (139). In some cases, computing system 110 through User Interface (Ul) availability and/or database 120 may be used to facilitate remote user access to part (or whole) of the information in Data Repository 130. This example illustrates a scenario of non-local geographical location of computing device 111 relative to 110, where the data repository is located, made possible through organization LAN 101, that may be cross-geographic in nature possible through organization network technology that has multilocation or even cross-border international presence. In this sense, FRM Server (110) or FRM Database (120) embodiments may also be in external or vendor premise, where direct secured communication is established between Organization Internal Environment computer network and the vendor premise, also secured cloud network.

In addition to computing devices 161-163, External Environment 102 may include data repository 171-173. With computing devices Counterparty 161 and Exchange 162, in addition to trading activities, organization may be required to compare and agree on trade information stored in database 120 versus those stored in databases 171 or 172, e.g. in agreeing on netting and collateral amounts. In relation to Market Data Provider computing device 163 and database 173, the organization need access to select and download necessary market data information required by the organization computing system 110.

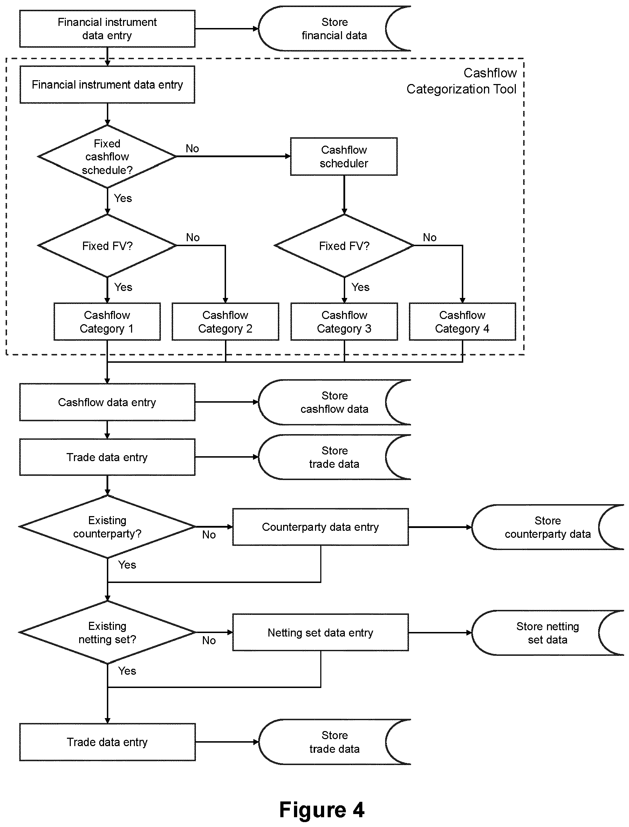

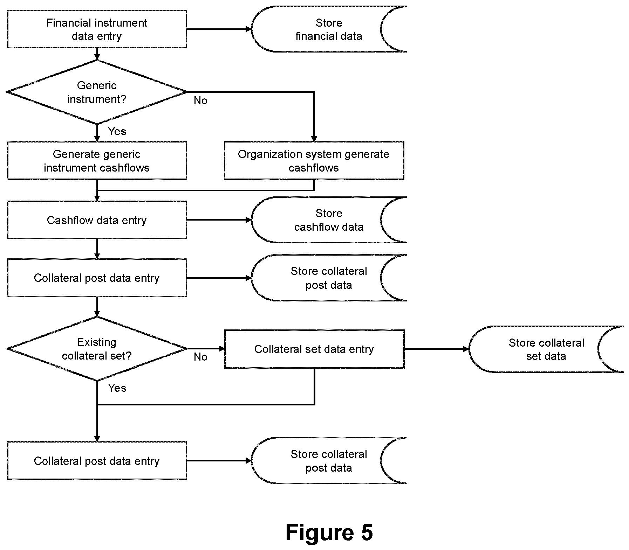

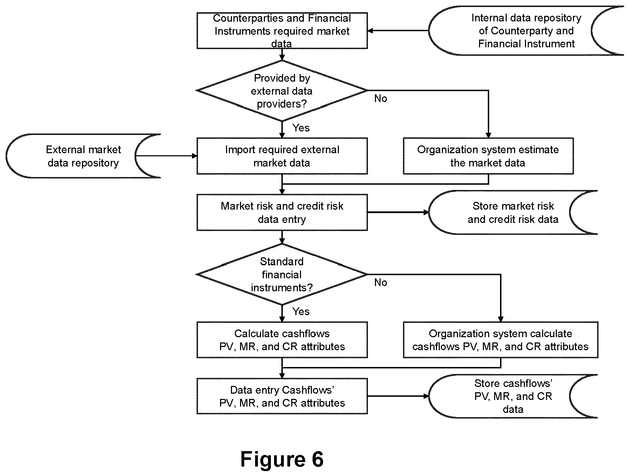

Figure 2 explains the data entities hierarchy in the FRM system data model. Figure 3 represents relationship of information across different data entities in a data model diagram representation. Figure 4 contains flowchart of the data recording process for trade workflow, Figure 5 for collateral post workflow, and Figure 6 for market data entry workflow. Note in the mentioned workflow, data entry may also refer to a direct data feed from other computing systems or data repositories via computer network as a possible embodiment.

Before a trade entry takes place, the user needs to enter financial instrument details via user interface in computing system 110 into financial instruments database table 132, containing all records of financial instruments as represented by a set of financial instruments: *instrument t,1* until *instrument t,n₂* (221) in Figure 2. Computing program in the organization's computing system 110 will produce a generic cashflows information according to the prepared financial instrument given a standard financial instrument type (e.g. loan, deposit, forward, swap, bond). Containing all records of cashflows, cashflows database table 131 will store these generated cashflows as represented by a set cashflows: *cashflow t,1* until *cashflow t, n₁* (211) in Figure 2. When non-standard instrument is introduced, the organization need to input set of cashflows based on their estimations and need to enter the data via user interface in computing system 110 into the cashflows database table 131.

In the case of trading with new counterparty, user needs to enter counterparty data via user interface in computing system 110 into counterparty database table 135, containing all records of counterparties, represented by set of counterparties: *counterparty 1* until *counterparty n* (251) in Figure 2. Afterwards, a netting set should be made as the container of trades with the counterparties. If there is no netting set agreement taking place for two or more trades with the counterparty, a netting set will correspond to only one trade, otherwise one netting set will correspond to multiple trades to offset cashflows from multiple trades when they are taking place at the same time in the same currency. New netting set needs to be entered by the user via user interface in computing system 110 into netting set database table 134, containing all records of nettings sets, represented by *netting set 1* until *netting set n₄ (241)* in Figure 2. After all related cashflows, financial instruments, netting set, and counterparty are available in data repository 130, data entry for the trade can be done. The user needs to enter trade data via user interface in computing system 110 into trade database table 133, containing all records of trades, represented by: *trade* 1 until *trade n₃* (231) in Figure 2.

Under the presence of collateral exchange agreement, collateral posting needs be done under a collateral set. Collateral workflow is similar to trade workflow in relation to financial instrument and cashflow data need to be in each corresponding database table, represented by set of instruments: *instrument c,1* until *instrument c,n₆* (222), and set of cashflows: *cashflow c, 1* until *cashflow c,n₅ (212)* in Figure 2. Note the two sets of indexations for each cashflow and financial instrument, where "t"-index represents trade-related cashflows, while "c" -index represents collateral-related cashflows. The same applies for trade-related and collateral-related financial instruments. Under a situation where any trade or collateral post refer to the same financial instrument, thus set of cashflows, financial instrument and cashflow entries still need to be uniquely stored in the database as they will be linked to different trade or collateral post data.

Counterparty data entry is skipped as there will only be collateral post under the condition of an existing trade, thus counterparty data should already be available in the database table 135. New collateral set needs to be entered by the user via user interface in computing system 110 into collateral set database table 136, containing all records of collateral sets, represented by: *collateral set* 1 until *collateral set n₈* (242) in Figure 2. Then, as all related cashflows, financial instruments, collateral set, and counterparty are available in data repository 130 that the collateral post can take place. The user needs to enter collateral post data via user interface in computing system 110 into collateral post database table 137, containing all records of collateral posts, represented by: *collateral post 1* until *collateral post n₇ (232)* in Figure 2.

Relationships between netting sets and collateral sets are showed in Figure 2 in form of dashed lines. This reflects a netting set relationship with collateral set, as when collateral management is made with a counterparty, the posted collaterals 307 are always booked under collateral sets 308, where all members of collateral sets 308 must be linked with at least one of the netting sets 304, is the collateral agreement on collateral set is to mitigate credit risk from open exposure of a netting set. A netting set does not always have a collateral set linked, if there is no collateral agreement in place.

Note that in both trade and collateral post workflows, there is no introduction about portfolio, which commonly spotted when booking trade. This is intentionally prepared in the present invention to support FRM main objective which includes CR mitigation tools, thus netting set and collateral set allocations supersedes portfolio allocation concept. As the organization may have two or more business lines, or portfolios, facing the same counterparty, but having only one netting and collateral agreements, expressing a one-door settlement and collateral management approach despite trades may be done with multiple business teams in the organization. Nevertheless, the disclosure data model is not designed to not specifically allowing extra portfolio static property in trade level for the purpose of aggregation from business or portfolio perspective, as long as the main FRM objective to maintain cross-silo risk management upholds.

Figure 6 contains the workflow for market data necessary to perform various PV, MR, and CR related metrics in cashflow level. If the data was not made publicly available free of charge, or available but not in the desired technical specifications, the organization may need to pay certain amount of fees to subscribe data from external data providers. Therefore, before communicating with external data providers, the organization need to collect all active counterparties and financial instruments information that the organization currently has positions or exposures to from the internal data repository 130, that is database table Counterparties 135 and database table Financial Instruments 132, via user interface in computing system 110.

The organization needs to check whether the required market data of counterparties and financial instruments are available by the external market data providers. During this process, the organization may need to perform if the available market data is of good quality, for example: timely delivery, technical formatting, and even the source that the market data providers are collecting data from. Advanced checking may also be included, such as the market depth of the prices, to reflect that the market data is indeed reflecting a liquid market, in the sense that the trading execution price should not be deviating much from the provided data when the organization would like to trade (buy or sell) the financial instrument using the price as market reference.

This may also be the case if the organization intend to use the data to derive market data parameters, such as implied volatility from listed option or PD/LGD parameters from CDS. Otherwise, the organization may need to perform extra calculation to estimate what would be the right market price, based on a set assumptions and internal expert judgement. After market data information made available by external market data providers or internal market data estimates, the data is imported and stored via user interface in computing system 110 into data repository 130. For financial instruments information (e.g. prices, interest rates, volatilities), data is stored in database table Market Data 138, represented by set of market data: *market 1* until *market n₉* (271) in Figure 2. For counterparties information (e.g. PD, LGD), data is stored in database table Credit Data 139, represented by set of market data: *credit 1* until *credit n₁₀* (272) in Figure 2.

Market Data entity is a component entity of Financial Instrument entity and Cashflow entity, represented by the dashed lines connecting 271 with 211, 212, 221, and 222 in Figure 2. Credit Data entity is a component entity of Counterparty entity and Cashflow entity, represented by the dashed lines connecting 272 with 271 with 221, 222, and 251 in Figure 2

With the available market data information, the organization needs to categorize financial instrument, whether they are standard financial instrument or non-standard financial instrument that require internally developed calculation methodology, as developed by the organization's quantitative analytics or actuarial departments. In the standard case, computation of the PV, MR, and CR related metrics is done by computing program by the organization's computing system 110. Otherwise, the organization's quantitative analytics or actuarial departments needs to provide the required PV, MR, and CR metrics. Afterwards, data entry of cashflows' PV, MR, and CR attributes take place via user interface in computing system 110, stored in data repository 131 under database table Cashflows 131 to enrich the cashflows information.

To summarize, data hierarchy and workflow brings to a data model illustration Figure 3, explaining the relationship between data entities stored in data repository 130 in multiple database tables 131-139. Cashflow data entity 311, with physical data stored in database table cashflows 131, is derived from Financial Instrument data entity 321, with physical data stored in database table financial instrument 132. Financial Instrument data entity 321 is associated with Market Data entity 371, where its physical data stored in database table market data 138. Trade data entity 331 trade on Financial Instrument data entity 321, with Trade's physical data stored in database table Trades 133. When a trade is done, Trade data entity is contained by Netting Set data entity 341, with its physical data stored in database table netting set 134. The Netting Set 341 data entity is linked with Counterparty data entity 351, with its physical data stored in database table counterparty 135.

Counterparty data entity 351 has Collateral Set data entity 342, with its physical data stored in database table 136. Collateral Set data entity 342 also correspond with Netting Set data entity 341, reflecting the collateral agreement that can only take place against exposures coming from one or more netting sets. Collateral Set data entity 342 contains Collateral Post data entity 332, with its physical data stored in database table 137. The Collateral Post data entity 342 reflects act of posting Financial Instrument data entity 321 as collateral. Counterparty data entity 351 has Credit Data entity 372 associated with, where its physical data stored in database table Credit Data 139.

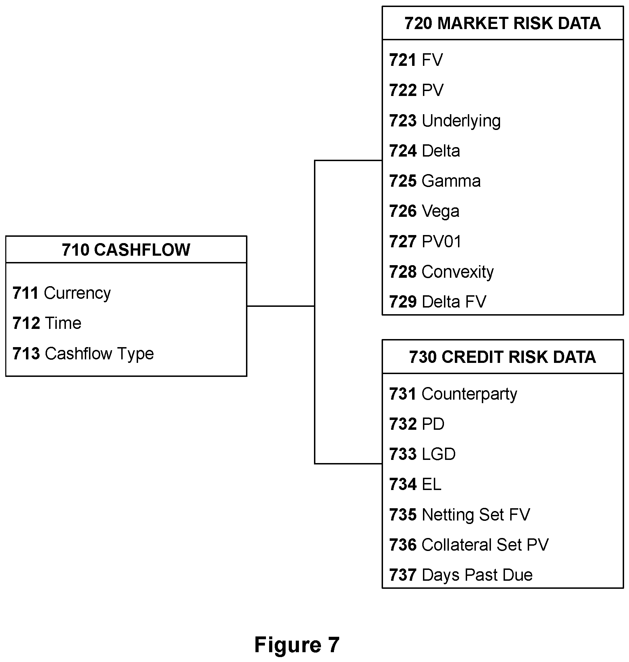

Figures 7 illustrates cashflow data entity properties, grouped under 3 categories: Cashflow 710, reflecting the inherent properties, Market Risk Data 720, reflecting associated market risk properties, and Credit Risk Data 730, reflecting associated credit risk properties.

Under Cashflow 710 category, Cashflow's property Currency 711 reflects the currency of the cashflow as derived from Financial Instrument entity. Cashflow's property Time 712 reflects the time to mature or settle of the cashflow as derived from Financial Instrument entity's contractual specification. The derivation may originate from certain contractual specification that do not explicitly mention the specific time inside the associated financial instrument, for example a monthly interest settlement from starting date of a deposit, in which derived by a computing program. Cashflow's property Cashflow Type 713 reflects the type and source of the cashflow as derived from financial instrument entity. The type dictionary may vary across organizations, as long as cashflow type and source data linage of the selected cashflow can be easily traced following the data model hierarchy.

Under Market Risk Data 720 category, Cashflow's property FV (future value) 721 reflects the amount of cashflow as derived from Financial Instrument entity. This property may contain static value or referring to a function of the financial instrument's underlying. Cashflow's property PV 722 reflects the PV (present value) of the cashflow.

Cashflow's property Underlying 723 reflects the underlying of the cashflow as derived from Financial Instrument entity. Note that under a multiple underlying or references, the Underlying properties may take a form of multiple values, instead of a single value, reflecting multiple underlying. Cashflow's property Delta 724, Gamma 725, and Vega 726 reflects the sensitivities, or also called Greeks. These 3 properties show the impact of underlying market data change, related to Cashflow's property Underlying 723, to the PV or Cashflow's property PV 722. Cashflow's property Delta 724, Gamma 725, and Vega 726 are not applicable to fixed cashflows, or those not having underlying.

Cashflow's property PV01 727 and Convexity 728 reflects the PV01 and convexity of the cashflow. Both also form of sensitivities as Delta and Gamma, but PV01 and Convexity show the impact of applicable discount rate change used in PV calculation to the cashflow's PV, or cashflow's PV property 722.

Cashflow's property Delta FV 729 reflects also sensitivity and close to the definition of Delta, but with respect to FV instead of PV to reflect sensitivity of the actual cashflow amount by settlement (FV) to the change in underlying price.

Under Credit Risk Data 730 category, cashflow's property Counterparty 731 reflects the counterparty of the cashflow, as derived from Financial Instrument entity, ultimately also derived from the related Trade entity, or Collateral Post entity, as previously explained in data entity relationship diagrams Figure 2 and Figure 3. Cashflow's PD (Probability of Default) property 732 reflects the probability of default of the cashflow's counterparty before the cashflow is settled. Cashflow's LGD (Loss Given Default) property 733 reflects the portion of the cashflow that will be loss before settlement if the cashflow's counterparty defaulted. Cashflow's EL (Expected Loss) property 734 reflects the expected loss that can take place before settlement if the cashflow's counterparty defaulted.

Cashflow's Netting Set FV property 735 reflects the total FV amount of the cashflow's corresponding netting set with the cashflow's counterparty, following the data entity relationship diagrams in Figure 2 and Figure 3. It shows the total sum of all FV Function property 721 for all cashflows that shares the same netting set as the cashflow. Cashflow's Collateral Set PV property 736 reflects the total PV of all cashflows under collateral sets associated with the cashflow's netting set, following the data entity relationship in Figure 2 and Figure 3. Cashflow's Days Past Due (DPD) property 737 reflects to number of days that a matured or expired cashflow left unsettled by the counterparty.

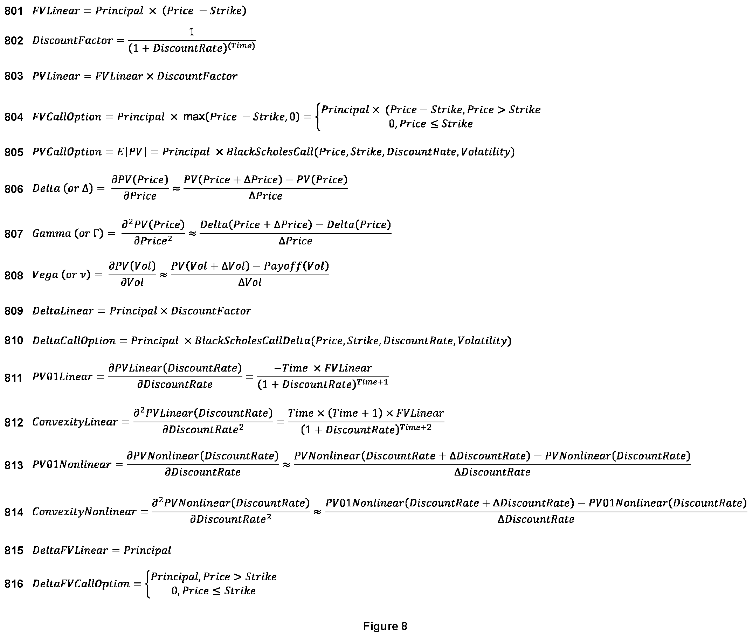

Figure 8 contains standard mathematical formulas to elaborate the explanations on Cashflow's properties 721-729 under Market Risk Data 720 category. When Cashflow's property FV 721 reflects a payoff function, this can take a form of "linear payoff" or "non-linear payoff", reflecting what shape the cashflow payment amount would take if expressed as a mathematical graph of the function along the underlying price axis. Given the vast possibility of non-linear pay-off, this disclosure will focus on a simple European call option payoff function and associated sensitivities (Delta, Gamma, and Vega) that mostly relevant for professionals dealing with such non-linear payoff financial instruments. When an explanation contains market data related information (price, interest rate, or volatility parameter), it refers to the market data information as presented in database table Market Data 138, stored in data repository 130.

"FVLinear", corresponding to Cashflow's property FV 721, is presented in the mathematical formula 801. "Principal" reflects the cashflow's principal amount, or monetary multiplier that may also referred as nominal, notional, or contract size, depending on the financial instrument type, which should be inherently showed inside the Cashflow's property FV 721 or as specified in the cashflow's contractual agreement. "Price" reflects the current market price of the cashflow's underlying, as in Cashflow's property 723. "Strike" reflects the contractual agreed price, that is the important negotiated part of a trade between organization and counterparty, inherently showed inside the cashflow's property FV 721.

"DiscountFactor" is presented in the mathematical formula 802, to be used in "PVLinear" mathematical formula 803. "DiscountRate" reflects the applicable interest rate used in the discounting of cashflow, corresponding to the cashflow's currency or Cashflow's property Currency 711. "Time" reflects the time to maturity/settlement of the cashflow, referring to present time distance to Cashflow's property 712 in years

"PVLinear", corresponding to cashflow's property PV 722, is presented in the mathematical formula 803 when Cashflow's FV property 721 reflects a linear payoff function, or as "FVLinear" definition in mathematical formula 801. "DiscountFactor" is the discount multiplier applied on "FVLinear", reflecting the time value of money on backward direction across the time axis.

There are tremendous amounts of possible forms of non-linear functions that cannot be explicitly mentioned one-by-one, therefore a European call option is used to explain further all possible cashflow's property associated with non-linear payoff cashflows. Note that in the presence of non-linear function, a probabilistic or statistical methodology is required to calculate the PV and sensitivities, such as the Black-Scholes call option method, which will be referred to in mathematical formula 805 and 810.

"FVCallOption" of a European Call Option payoff is presented in the mathematical formula 804. The formula is an illustration of a non-linear payoff possibility with European call option to illustrate, corresponding to Cashflow's property FV 721. "Principal", "Price", and "Strike" are similarly defined as in mathematical formula 801. The maximum function shows that an amount or Cashflow's property FV 721 will be paid out only when the underlying price is above the strike price as agreed in the call option contract. When such payoff showed in graph representation along the price axis of Cashflow's property Underlying 723, it will not show a straight line, thus the name non-linear payoff. As the payoff split in two different scenarios, calculating PV of a non-linear payoff required statistical or probability approach and require different treatment compared to linear payoff.

"PVCallOption" of a European call option payoff function is presented in the mathematical formula 805, which is the present value of a European call option cashflow. The formula is an illustration of a non-linear payoff PV possibility, corresponding to Cashflow's property PV 722. "Principal", "Price", "Strike", and "DiscountRate" are similarly defined as in mathematical formula 801 and 802. "Volatility" reflects volatility, or statistical/probability property of the cashflow's underlying (or call option's underlying in this context). "Price", "Strike", "DiscountRate" and "Volatility" are used as the input parameters into "BlackScholesCall", representing a Black-Scholes call option pricing formula, financial industrial standard formula for calculation of European call option price for a unit of call option.

"Delta" is presented in the mathematical formula 806, reflecting the Delta sensitivity of Cashflow's property Delta 724. "PV" may reflect "PVLinear" as in mathematical formula 803, or non-linear PV as represented by "PVCallOption" in mathematical formula 805. "Price" is similarly defined as in both mathematical formulas. Mathematical formula 806 is the formal mathematical definition of first-order derivative change impact from rate of change of underlying. In the case of linear pay-off, using calculus it can be derived that the Delta value is the same as FV times discount factor, but for non-linear payoff direct calculus derivation is not possible for general linear payoff case. Therefore, mathematical formula 806 also includes finite difference methodology to approximate this value for non-exact calculation (right-hand side of the equation) given the vast variety of non-linear financial instruments that very likely has no closed-form solution for Delta. In the presence of multiple Cashflow's property Underlying 723, multiple numbers of Delta values are expected to represent Delta sensitivity with respect to each underlying.

"Gamma" is presented in the mathematical formula 807, reflecting the Gamma sensitivity of Cashflow's property Gamma 725. "PV" reflects only to non-linear PV function, as only non-linear payoff function would have second order derivative, or "PVCallOption" if the payoff is European call option type. "Price" is similarly defined as in mathematical formula 803 or 805. Mathematical formula 807 is the formal mathematical definition of second-order derivative change impact from rate of change of underlying. As in 806, the mathematical formula 807 also includes finite difference methodology to approximate this value for non-exact calculation (right-hand side of the equation) given the vast variety of non-linear financial instruments that very likely has no closed-form solution for Gamma. As Delta, in the presence of multiple Cashflow's property Underlying 723, multiple numbers of Gamma values are expected to represent Gamma sensitivity with respect to each underlying.

"Vega" is presented in the mathematical formula 808, reflecting the Vega sensitivity of Cashflow's property Vega 726. "PV" reflects only to non-linear PV function, as only non-linear payoff function would have second order derivative, or "PVCallOption" if the payoff is European call option type. "Price" is similarly defined as in mathematical formula 803 or 805. Mathematical formula 808 is the formal mathematical definition of first-order derivative change impact from rate of change of underlying's volatility, which can be similarly said of Delta sensitivity but instead of underlying price, it refers to underlying volatility change. As in 806, the mathematical formula 808 also includes finite difference methodology to approximate this value for non-exact calculation (right-hand side of the equation), also due to the vast variety of non-linear financial instruments that has no closed-form solution. As Delta, in the presence of multiple Cashflow's property Underlying 723, multiple numbers of Vega values are expected to represent Vega sensitivity with respect to each underlying.

"DeltaLinear" is presented in mathematical formula 809, reflecting the Delta sensitivity of Cashflow's property Delta 724 when Cashflow's FV property 721 reflects a linear payoff function. Note that for Delta sensitivity of linear payoff PV shown in 802, the Delta sensitivity will always be equal to the discount factor times cashflow's principal.

"DeltaCallOption" is presented in mathematical formula 810, reflecting the Delta sensitivity of Cashflow's property Delta 724 when Cashflow's FV property 721 reflects a European call option payoff, to represent non-linear payoff function. In presence of non-linearity, derivation of a non-linear PV with respect to its input parameter (e.g. price or discount rate) will always require certain statistical or probabilistic approach, unlike "DeltaLinear" in 809 where Delta sensitivity can be easily obtained.

"PV01Linear" is presented in the mathematical formula 811, corresponding to Cashflow's property PV01 727 when Cashflow's FV property 721 reflects a linear payoff function. Compared to mathematical formula 806, "PV01Linear" is similar in nature to Delta on linear payoff function, but with respect to discount rate instead of underlying. "FVLinear", "PVLinear", "DiscountRate", and "Time" are similarly defined as in mathematical formula 801-803.

"ConvexityLinear" is presented in the mathematical formula 812, corresponding to Cashflow's property Convexity 812 when Cashflow's FV property 721 reflects a linear payoff function. Compared to mathematical formula 807, "ConvexityLinear" is similar in nature to Gamma on linear payoff function, but with respect to discount rate instead of underlying. "FVLinear", "PVLinear", "DiscountRate", and "Time" are similarly defined as in mathematical formula 801-803.

"PV01 Nonlinear" is presented in the mathematical formula 813, corresponding to Cashflow's property PV01 727 when Cashflow's FV property 721 reflects a non-linear payoff function. Compared to mathematical formula 806, "PV01Nonlinear" is similar in nature to Delta on nonlinear payoff function, but with respect to discount rate instead of underlying. "PVNonlinear" is defined as present value when of non-linear nature. "DiscountRate" is similarly defined as in mathematical formula 802.

"ConvexityLinear" is presented in the mathematical formula 814, corresponding to Cashflow's property Convexity 728 when Cashflow's FV property 721 reflects a non-linear payoff function. Compared to mathematical formula 807, "ConvexityNonlinear" is similar in nature to Gamma on nonlinear payoff function, but with respect to discount rate instead of underlying. "PVNonlinear", "PV01Nonlinear", and "DiscountRate" are similarly defined as in mathematical formula 802 and 813.

"DeltaFVLinear" is presented in the mathematical formula 815, corresponding to cashflow's property Delta FV 729, reflecting Delta sensitivity to cashflow's property FV Function 721 when reflecting a linear payoff function. As Delta is defined in 806, "DeltaFVLinear" is similar nature to Delta sensitivity, but instead to Cashflow's PV property 722 Delta is calculated as first-derivative with respect to Cashflow's FV property 721. "Principal" is similarly defined as in mathematical formula 801.

"DeltaFVCallOption" is presented in the mathematical formula 816, corresponding to cashflow's property Delta FV 729, reflecting Delta sensitivity to cashflow's property FV Function 721 when reflecting a European call option payoff function. As Delta is defined in 806, "DeltaFVCallOption" is similar nature to Delta sensitivity, but instead to Cashflow's PV property 722 Delta is calculated as first-derivative with respect to Cashflow's FV property 721. "Principal", "Price", and "Strike" are similarly defined as in mathematical formula 804. Note that as in the European call option case, Delta with respect to FV is possible to be derived, but the value will differ according to the "Price" value relative to "Strike" value, reflecting the non-linear nature of the payoff.

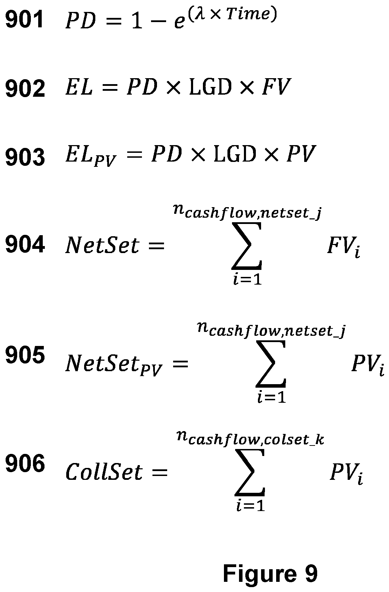

Figure 9 contains standard mathematical formulas to elaborate the explanations on Cashflow's property 732, 734-736 under Credit Risk Data 730 category. When an explanation contains credit data related information (e.g. hazard rate parameter or LGD), it refers to the credit data information as presented in database table Credit Data 139, stored in data repository 130.

"PD" is presented in the mathematical formula 901, corresponding to the Cashflow's PD property 732. "*λ*" represents hazard rate or default rate and "Time" represents the time to maturity/settlement of the cashflow. Hazard rate may be derived from credit default swap (CDS) instrument called as market-implied hazard rate, or in such absent derived by the organization's quantitative analytics or actuarial departments, as stated in workflow illustration Figure 6. Though eventually modeled by the organization's quantitative analytics or actuarial teams, note that PD has time dimensionality property, as PD reflects the probability during the lifetime of the cashflow until settled, therefore cashflow's Time property 712 should be used an input into the PD calculation.

"EL" is presented in the mathematical formula 902, corresponding to the Cashflow's property EL 734. "PD" refers to Cashflow's PD property 732, "LGD" refers to Cashflow's LGD property 733, and "FV" refers to Cashflow's property FV 721. LGD may also be derived from credit default swap (CDS) instrument, or in such absent derived by the organization's quantitative analytics or actuarial departments, as stated in workflow illustration Figure 6.

"EL_PV" is presented in the mathematical formula 903, corresponding to the Cashflow's property EL 734. Mathematical formula and explanation are the same as 902, except that "FV" replaced by "PV", which refers to Cashflow's property PV 722. "EL_PV" may be used to replace "EL" for Cashflow's property EL 734 as there may be standards requiring the organization to calculate EL using PV instead of FV, e.g. Basel or IFRS.

"NetSet" is presented in the mathematical formula 904, corresponding to the Cashflow's property Netting Set FV 735. "FV_i" represents the i-indexedCashflow's FV Function property 721, where the i-indexation is to reflect iterated addition operator for all cashflows from i=1 to n_cashflow_netset_j, or number of cashflow members along netting set j, in which the cashflow is located.

"NetSet_PV" is presented in the mathematical formula 905, corresponding to the Cashflow's property Netting Set FV 735. Mathematical formula and explanation are the same as 902, except that "FV_i" replaced by "PV_i", which refers to Cashflow's property PV 722. "NetSet_PV" may be used to replace "NetSet" for Cashflow's property Netting Set 735 as there may be standards requiring the organization to calculate exposures under netting set using PV instead of FV, e.g. Basel.

"CollSet" is presented in the mathematical formula 906, corresponding to the Cashflow's property Collateral Set PV 736. "PV_I" represents the I-indexed Cashflow's property PV 722, where the I-indexation is to reflect iterated addition operator for all cashflows from I=1 to n_cashflow_colset_k, or number of cashflow members along collateral set k, in which the cashflow is located.

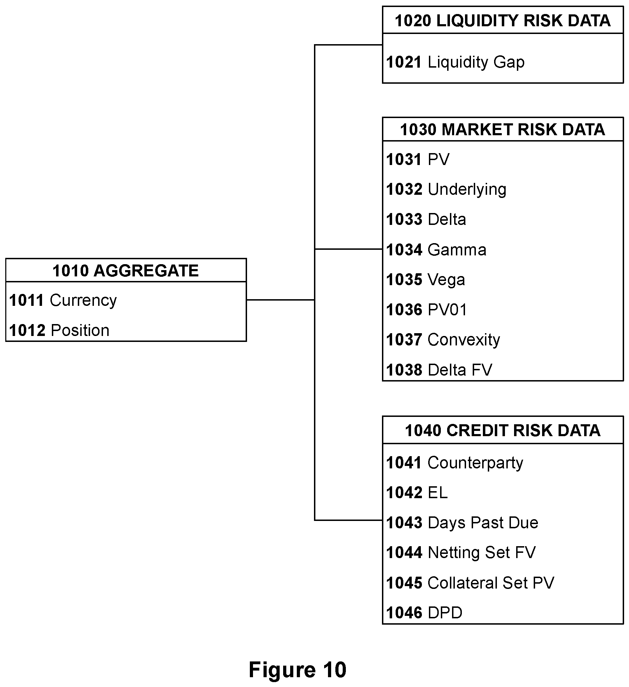

Figures 10 illustrates data entity properties of aggregated cashflow derived data, in higher data entity level than cashflow data entity. In the practice of CCR and XVA, two subdisciplines of FRM, MR and CR risk information need to be presented in netting set level, along with corresponding information from associated collateral set(s). CCR and XVA calculation are required by part of IFRS, Basel (for banks), and Solvency (for insurance), where in the latter two frameworks related to show minimum required FRM activities is implemented.

The data entity aggregation is as reflected in data hierarchy Figure 2, with level of aggregation in financial instrument, trade, netting set, collateral post, collateral set, or counterparty. These properties are grouped under 4 categories: Aggregate 1010, reflecting the static property used to aggregate cashflow-level derived data, Liquidity Risk Data 1020, reflecting associated liquidity risk properties, Market Risk Data 1030, reflecting associated market risk properties, and Credit Risk Data 1040, reflecting associated credit risk properties. Before proceeding with aggregation, the organization must determine beforehand numbers of time buckets, how to map of Cashflow's property Time 712 to the time buckets, including the methodology to determine the mapping.

Under Aggregate 1010 category, Aggregate's property Currency 1011 reflects the aggregated cashflows currency of the aggregated derived data in the other 3 categories. This is important to not mixed one currency derived data to another currency blindly without taking into account difference in currency, thus exchange rate. Aggregate's property Position 1012 reflects aggregated units of cashflows, normally from information when trade or collateral post is inputted. A positive number reflect buy or long positions from the organization perspective and a negative number reflect sell or short positions from the organization perspective. For Financial Instrument data entity, Aggregate's property Position 1012 will always show value of 1 (one), reflecting a unit of financial instrument.

Under Liquidity Risk Data 1020 category, Aggregate's property Liquidity Gap 1021 reflects the aggregated cashflows total FV, grouped along the time bucket axis, corresponding to the time bucket allocation of its cashflow members' property Time 712, as explained previously in Table 1.

Under Market Risk Data 1030 category, Aggregate's properties PV 1031, Underlying 1032, Delta 1033, Gamma 1034, Vega 1035, PV01 1036, Convexity 1037, and Delta FV 1038 are all defined as how cashflow-level properties with similar names are defined, except that the corresponding aggregate level properties are all expressed in the total sum per time bucket. The representation will follow as in Table 1 and explanation of Aggregate's property Liquidity Gap 1021.

Under Credit Risk Data 1040 category, Aggregate's properties Counterparty 1041, EL 1042, Netting Set FV 1043, Collateral Set PV 1044 are all defined as how cashflow-level properties with similar names are defined, except that the corresponding aggregate level properties are all expressed in the total sum per time bucket. The representation will follow as in Table 1 and explanation of Aggregate's property Liquidity Gap 1021.

Note that when the considered aggregate level is at the netting set or collateral set level, and above, following data entity hierarchy in Figure 2, Aggregate properties 1043 and 1044 will reflect the total sum per time bucket as the aggregate level shown. In otherwords, moving up along the data entity hierarchy starting from Netting Set Aggregate level, 1043 will have identical values as 1021 since both referring to total sum of FV per time bucket in the same level. The same applies for 1044 and 1031 when starting from Collateral Set Aggregate Level moving up along the data entity hierarchy, as both referring to identical total sum of PV per time bucket in the same level.

For Aggregate's property Days Past Due (DPD) 1045, it is also defined as how explained in corresponding cashflow-level definition, except that it is expressed as maximum DPD figure for all cashflow members' property DPD 737 sharing the same time bucket along the time-axis.

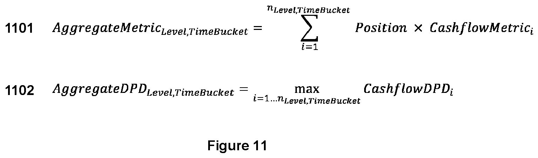

Figure 11 contains standard mathematical formulas for LR risk metrics. While Figure 8 and 9 focused on MR and CR metrics presented in cashflow level, it allows for above-level aggregation, allowing top-level management of LR, which is normally observed at the heart of the organization's FRM operations, that is under the Asset Liability Management (ALM) department of FRM.

"AggregateMetric" is presented in the mathematical formula 1101, corresponding to the aggregation of Cashflow's various risk metric properties, corresponding to various Aggregate level properties as shown in aggregation mapping table (Table 2). "Level" corresponds to data entity above Cashflow data entity following data entity hierarchy as shown in Figure 2, thus starting from Financial Instrument data entity level and above. "TimeBucket" reflects the time bucket in which the aggregation taking place in the data matrix as shown in Table 1. "Level, TimeBucket" indexation reflects the data entity level and time bucket where the aggregation taking place, this can be for example "NettingSet,1M" for an aggregation in Netting Set level and all cashflows with Time property 712 falls under the 1M (1 month) time bucket, following the organization's time bucket mapping procedure. "Position" reflects the number of financial instruments in aggregate level as reflected by Aggregate's property Position 1012. "CashFlowMetric_i" reflects the value of mapped cashflow metric as in Table 2, i-indexed to represent all cashflow members of the "Level" and "TimeBucket" aggregation set. The iterated addition operator is set from 1 (one) to "n_Level,TimeBucket", reflecting number of cashflow members under the "Level" and "TimeBucket" aggregation set.

"AggregateDPD" is presented in the mathematical formula 1102, corresponding to the maximum of Cashflow's Days Past Due (DPD) property 720. "Level", "TimeBucket", "Level,TimeBucket" indexation, and "n_Level,TimeBucket" are all similarly defined as in mathematical formula 1101 explanations. "CashFlowDPD_i" reflects the value of cashflow's DPD property 720, indexed starting from i=1 until "n_Level,TimeBucket". A maximum operator is shown in the formula to reflect the maximum DPD value of all the indexed cashflows, or all cashflow under the "Level,TimeBucket" aggregation set of cashflows.

**Table 2**

| **Cashflow Level Properties** | **Corresponding Aggregate Level Properties** |
|---|---|
| FV (721) | Liquidity Gap (1021) |
| PV (722) | PV (1031) |
| Underlying (723) | Underlying (1032) |
| Delta (724) | Delta (1033) |
| Gamma (725) | Gamma (1034) |
| Vega (726) | Vega (1035) |
| PV01 (727) | PV01 (1036) |
| Convexity (728) | Convexity (1037) |
| Sensitivity FV (729) | Sensitivity FV (1038) |
| Counterparty (731) | Counterparty (1041) |
| EL (734) | EL (1042) |
| Netting Set FV (735) | Netting Set FV (1043) |
| Collateral Set PV (736) | Collateral Set PV (1044) |

In a non-fixed or stochastic amount case, based on the cashflow's FV Function property 721, we can calculate how much cashflow amount that we are expecting based on current market price in database table Market Data 318 in data repository 310. However, with a non-fixed or stochastic time or schedules, cashflow maturity or settlement time may span from tomorrow until the end FRM observation time horizon that the organization sees fit (e.g. 50 years), which can also be referred to investment horizon in another terminology. In this case, the quantitative analytics or actuarial department may present its own estimate on cashflow schedule distributions, along with its market risk properties, if any.

In insurance industry for example, projected claims distribution is an actuarial mathematical model to estimate the amounts of claims per year for specific number of years ahead. Similar case is also in banking industry, concerning cash balance from retail saving account. Since there is no contractual maturity, customers may withdraw their money anytime, therefore Non-Maturity Deposit (NMD) model is also commonly used to do similar modelling of cashflow, as in insurance. In financial modelling, it is common practice to consider the aggregate behavior of such financial instrument category into a single financial instrument, thus a single stream of cashflows, as the model will take into account aggregate behavior of the financial instruments instead of attempting to estimate each cashflow, which can be cumbersome.

Consider a product with a stochastic time schedule that will bring a total estimation of 100 million Euro over the next 10 years for the organization large retail customer base. Its aggregated 100 million Euro cash may be estimated as a constant incoming cashflow of 10 million Euro per year for the next 10 years by the organization quantitative analytics and actuarial teams. As the inherent random time schedule behavior is non-observable anymore with this determination of amount and schedules over the next 10 years, these 10 cashflows may be presented as a single stream of cashflows and aggregated as a single financial instrument of the product. These cashflows output can be imported into FRM computing system 110, with data stored in cashflow database table 131 in data repository 130, as presented in Table 3 for in Financial Instrument aggregation. Aggregation in Financial Instrument data entity level and properties will follow the logic as described in Figure 10 and Figure 11 explanations and the following explanations will be in the Cashflow data entity level and properties.

Following Cashflow data entity property structure as explained before in Figure 7 illustration, the 10 imported cashflows will have Cashflow's properties Currency (711), Time (712), and FV (721). Along with the calculation process derived in Figure 8, Cashflow's properties PV (722), PV01 (727), and Convexity (728) can be calculated and presented in Table 3. Cashflow's property Cashflow Type (713) may be filled as "ProductName", reflecting the product name applied in this example. On Cashflow's properties Underlying (723), Delta (724), Gamma (725), Vega (726), and Delta FV (729), given the cashflows are assumed to be fixed or constant for the next 10 years, these properties are not applicable and may be set to zero in Table 3 report matrix.

Cashflow's property Counterparty (731) may be set as "ProductName", reflecting an aggregate customers behavior model applied in this example. While Cashflow's properties PD (732), LGD (733), and DPD (737) may be modeled separately by quantitative analytics and actuarial departments as these properties should reflect aggregate behaviors. Assuming for the example calculation PD is set to be constant parameter 3% and LGD at 40%, based on mathematical formulas 902 and 903 in Figure 9 then Cashflow's properties EL (734) property and EL_PV can also be calculated as presented in Table 3 as comparison. Cashflow's properties Netting Set FV (735) property and Netting Set PV can be calculated and given the aggregate nature of the account, they may be reported with similar figures as FV (721) and PV (722) respectively. Assuming there is no collateral, then Cashflow's property Collateral Set PV (736) is not applicable and may be set to zero in Table 3 report matrix.

**Table 3**

| **Time Bucket** | **1Y** | **2Y** | **5Y** | **7Y** | **10Y** |
|---|---|---|---|---|---|
| *FV*/*Liqudity Gap (721*/*1021)* | 10.00 | 10.00 | 30.00 | 20.00 | 30.00 |
| *PV (722*/*1031)* | 9.52 | 9.07 | 24.70 | 14.57 | 19.35 |
| *PV01 (727*/*1036)* | -9.07 | -17.28 | -93.33 | -90.02 | -165.29 |
| *Convexity (728*/*1037)* | 17.28 | 49.36 | 456.47 | 645.25 | 1580.75 |
| *Delta (724*/*1033)* | 0.00 | 0.00 | 0.00 | 0.00 | 0.00 |
| *Gamma (725*/*1034)* | 0.00 | 0.00 | 0.00 | 0.00 | 0.00 |
| *Vega (726*/*1035)* | 0.00 | 0.00 | 0.00 | 0.00 | 0.00 |
| *Delta FV (729*/*1038)* | 0.00 | 0.00 | 0.00 | 0.00 | 0.00 |
| *EL (734*/*1042)* | 0.12 | 0.12 | 0.36 | 0.24 | 0.36 |
| *EL_PV* | 0.11 | 0.11 | 0.30 | 0.17 | 0.23 |
| *NetSet_FV (735*/*1044)* | 10.00 | 10.00 | 30.00 | 20.00 | 30.00 |
| *NetSet_PV* | 9.52 | 9.07 | 24.70 | 14.57 | 19.35 |
| *CollSet_PV (736*/*1045)* | 0.00 | 0.00 | 0.00 | 0.00 | 0.00 |
| *DPD (737)* | 0 | 0 | 0 | 0 | 0 |
| *Underlying (723*/*1046)* | N/A | | | | |
| *Cashflow Type (713)* | ProductName | | | | |
| *Counterparty (731*/*1041)* | Counterparty | | | | |
| *PD (732)* | 3% | | | | |
| *LGD (733)* | 40% | | | | |
| *Currency (711*/*1011)* | EUR | | | | |

If the cashflows are linear to a certain underlying, then Underlying (723), Delta (724), and Delta FV (729) properties may be filled or calculated. Assuming the cashflow has linear payoff relative to the price of an underlying (called "ProductUnderlying") as explained in mathematical formula 802 in Figure 8, then Table 3 need to be adjusted to include Delta (724) and Delta FV (729) calculation, as shown in Table 4.

**Table 4**

| **Time Bucket** | **1Y** | **2Y** | **5Y** | **7Y** | **10Y** |
|---|---|---|---|---|---|
| *FV*/*Liqudity Gap (721*/*1021)* | 10.00 | 10.00 | 30.00 | 20.00 | 30.00 |
| *PV (722*/*1031)* | 9.52 | 9.07 | 24.70 | 14.57 | 19.35 |
| *PV01 (727*/*1036)* | -9.07 | -17.28 | -93.33 | -90.02 | -165.29 |
| *Convexity (728*/*1037)* | 17.28 | 49.36 | 456.47 | 645.25 | 1580.75 |
| *Delta (724*/*1033)* | 0.95 | 0.91 | 0.82 | 0.73 | 0.65 |
| *Gamma (725*/*1034)* | 0.00 | 0.00 | 0.00 | 0.00 | 0.00 |
| *Vega (726*/*1035)* | 0.00 | 0.00 | 0.00 | 0.00 | 0.00 |
| *Delta FV (729*/*1038)* | 1.00 | 1.00 | 1.00 | 1.00 | 1.00 |
| *EL (734*/*1042)* | 0.12 | 0.12 | 0.36 | 0.24 | 0.36 |
| *EL_PV* | 0.11 | 0.11 | 0.30 | 0.17 | 0.23 |
| *NetSet_FV (735*/*1044)* | 10.00 | 10.00 | 30.00 | 20.00 | 30.00 |
| *NetSet_PV* | 9.52 | 9.07 | 24.70 | 14.57 | 19.35 |
| *CollSet_PV (736*/*1045)* | 0.00 | 0.00 | 0.00 | 0.00 | 0.00 |
| *DPD (737)* | 0 | 0 | 0 | 0 | 0 |
| *Underlying (723*/*1046)* | ProductUnderlying | | | | |
| *Cashflow Type (713)* | ProductName | | | | |
| *Counterparty (731*/*1041)* | Counterparty | | | | |
| *PD (732)* | 3% | | | | |
| *LGD (733)* | 40% | | | | |
| *Currency (711*/*1011)* | EUR | | | | |

Continuing example as expressed in Table 4, as the displayed aggregate information is in netting set, this information may be used in calculating sensitivity and/or scenario risk analysis. In this example, the netting set has exposure to ProductUnderlying, as reflected under Aggregate's property Delta (1038), or to the Euro's discount curve, as reflected by Aggregate's properties PV01 (1036) and Convexity (1037). In this context a 0.01 Euro price increase of underlying (ProductUnderlying) price, will be immediately reflected by multiplying total Delta (1038) of ca. 4.06 million with 0.01 Euro, that would be ca. 40.6 thousand Euro profit from Delta P&L. In a similar way, applying a -0.05 Euro price drop to the underlying price would create ca. 202.8 thousand Euro loss from Delta P&L.

This is an illustration of how MR focused Greek/sensitivity analysis and scenario analysis used in practice. It starts from the view point of the organization's FRM department, identifying what are the underlying parameters (price, volatility, discount rate) that would relate to certain economic or market conditions. Then, a list of estimated movements for the underlying parameters movements are prepared, to be multiplied with the corresponding parameters. PV01 P&L may also be calculated in a similar way along with Convexity P&L, by taking into account the difference in multiplication methodology for second-order P&L impact calculation (Convexity P&L).

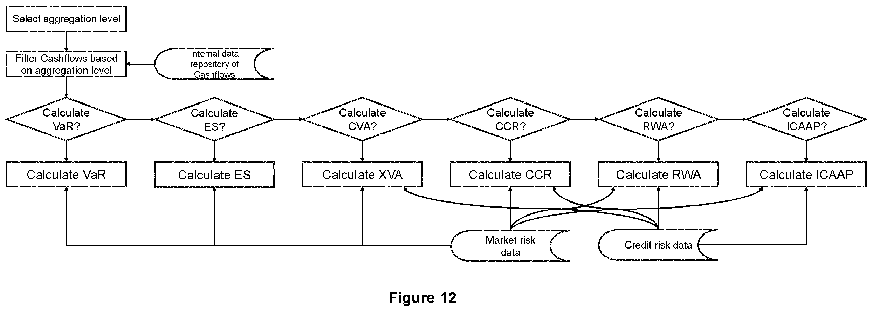

The relationship between Greek/sensitivity, P&L impact, and the estimated market parameters reflecting various economic or market conditions is the heart of sensitivity analysis and scenario analysis. Numerous accounting and regulatory standards calculation related to financial risk accounting reserve or regulatory capital are based on this concept. The present invention demonstrates method to perform such calculation, by focusing on VaR, ES, CCR, XVA, RWA, and ICAAP, to reflect the invention implementation, with accounting or regulatory standards in focus. Figure 12 illustrates how the workflow of this method in general, in relation to the previously explained data model and data entities.

The sensitivity multiplication methodology is more or less the same for the purpose of VaR, ES, Market Risk RWA/SCR, and Market Risk ICAAP/ORSA calculation, with the main focus would be how much expected loss given the market risk exposure. For VaR and ES, FRM department calculate or estimate how much shock or parameter moves that they need to apply in the sensitivity P&L calculation by statistical means, for example with 95% confidence level from return distribution. Unlike VaR and ES, for banks, Market Risk RWA (e.g. FRTB, Fundamental Review of the Trading Book) and Market Risk ICAAP (e.g. IRRBB calculation) supervisory weights are given under the regulations, in another word sensitivity P&L shocks are prescribed by the regulators, or at least the methodology. Similar situation applies to other regulated organization, such as insurance with Solvency framework with regards to SCR and ORCA calculation. As the reason of such exercise is to see whether the organization's capital is sufficient to absorb losses from Market Risk movement, internal-based minimum capital referred to Market Risk Economic Capital (EC) and regulatory-based minimum capital referred to Market Risk Regulatory Capital (RC).

Related to Credit Risk sensitivity analysis and scenario analysis, the main focus is on EL change subject to increase or decrease of its components: PD, LGD, and FV or PV, as reflected by mathematical formula 902 or 903 in Figure 9. However, since there is no sensitivity/Greek concept in Credit Risk, the impact is immediately calculated by using EAD, reflected as FV or PV in the Cashflow or Aggregate data entity representation, multiplied with estimated shock or parameter moves on PD and/or LGD. The internal estimation of Credit Risk parameters is in similar way as for Market Risk sensitivity analysis, taking consideration various market and economic conditions and list down possible PD and LGD for all counterparties that the organization has Credit Risk with, eventually a Credit VaR and Credit ES can be calculated, leads to EC from Credit Risk. However, just as with Market Risk, Credit Risk RWA and Credit Risk ICAAP exercises also depend on supervisory weights or methodology, leads to Credit Risk RC. Collateral may also be taken into account in both EC and RC calculations, in which while EC collateral calculation may directly use collateral PV calculation, RC collateral calculation may apply certain regulatory multiplier on the collateral PV, such as collateral haircut by asset class and financial instrument type.

XVA stands for Various Value Adjustment (VA), consisting of (but may not limited to), CVA (Credit VA), DVA (Debit VA), FVA (Funding VA), CoIIVA (Collateral VA), MVA (Margin VA), and KVA (Capital VA). XVA address the limitation of financial instrument valuation, as not taking into account Credit Risk from the counterparty, therefore the valuation needs to be adjusted. It is part of IFRS 13, but also included in Basel and Solvency Frameworks, with focus only on CVA. In demonstrating how the computing system can support the necessary exposures information, the discussed method will focus only on CVA, given other VA was derived with CVA concept at their core principle.

In the sensitivity analysis and scenario analysis of CCR and CVA, both Market Risk and Credit Risk information are used, as the scope of both metrics related to exposures driven by Market Risk components, but exposed to Credit Risk at the same time. The most common method in CCR and CVA calculations are based on market simulation or statistics estimation on valuation parameters (e.g. prices, volatilities, interest rates) of underlying netting set exposures. In general, CCR and CVA calculation may be explained in several simple steps: exposures are commonly represented through netting set level sensitivities, revalue the netting set PV using the simulated data results, subtract corresponding collateral set PV with from the results, then calculate CCR and CVA by multiplying with PD and LGD. Netting Set and Collateral Set data entities both hold the required sensitivities and PV information as Aggregate-level properties (see Figure 10), while PD and LGD information is available through Counterparty entity, that the Netting Set and Collateral Set are directly connected under the parent-child entity relationship (see Figure 2).

The prescribed CCR and CVA methodologies are more relevant for the calculation of internal capital or within accounting framework IFRS 13, therefore for CVA normally referred to as Accounting CVA. For regulatory purpose however, it will be different than the prescribed calculation method. In Basel III, CCR falls under Credit Risk RWA, while CVA is defined more as regulatory capital reserve to anticipate movement from Accounting CVA. In both cases, supervisors provide supervisory risk weights, or at least the methodology, to replace Credit Risk parameters (PD and LGD) in the prescribed method, yet still require similar data set requirements from Netting Set and Collateral Set data entities, that the present invention can provide.

The present invention has been described herein with reference to specific exemplary embodiments thereof. It will be apparent to those skilled in the art that a person understanding this invention may conceive of changes or other embodiments or variations, which utilize the principles of this invention without departing from the broader spirit and scope of the invention as set forth in the appended claims.

## Claims

1. A computer implemented method for financial risk data model, comprising:
defining a Financial Risk Management (FRM) data model comprising data entities representing cashflow, financial instrument, trade, netting set, counterparty, collateral post, collateral set, market data, credit data, and organization;
organizing data entities relationship, including parent-child hierarchical structure of data entities to reflect latest FRM process flow and data representation;
defining a set of FRM attributes on data entities;
defining a set of time buckets and matrix representation of time bucket-based report format, as used in Liquidity Gap report;
inputting data into the data model using an input interface configured to map the input data to corresponding attributes of the data entities;
recording FV, PV, Market Risk, Credit Risk attributes to cashflow data entity;
identifying set of cashflows corresponding to financial instrument, trade, netting set, counterparty, collateral post, collateral set, and organization data entities following data model hierarchical structure; and
recording aggregate sum, or aggregate max for Days Past Due (DPD), of FV, PV, Market Risk, Credit Risk, Liquidity Risk attributes to trade, netting set, counterparty, collateral post, collateral set, and organization data entities based on parent-child hierarchical structure of data entities.

2. A computer implemented method for cashflow-based FRM data model, comprising:
deriving cashflow data entity information from financial instrument data entity;
categorizing cashflow based on fixed or stochastic nature of cashflow's amount or future value (FV) and time to maturity/settlement attributes;
transforming cashflow with stochastic nature on FV or time to maturity/settlement attributes into discretized fixed cashflow;
categorizing cashflow based on its payoff function into linear cashflow or non-linear cashflow;
calculating FV, present value (PV), Delta, Vega, Gamma, PV01, Convexity, and Delta FV derived information from cashflow data entity as Market Risk attributes using information from market data entity;
calculating EL, DPD derived information from cashflow data entity as Credit Risk attributes using information from credit data entity;
calculating Liquidity Gap as aggregate sum of FVs of a cashflows set, as a Liquidity Risk attribute; and
calculating aggregate sum, or aggregate max for DPD, of PV, Market Risk, Credit Risk attributes of a cashflows set as identified to correspond with trade, netting set, counterparty, collateral post, collateral set, and organization data entities based on parent-child hierarchical structure.

3. A server and database system for storing and managing financial risk data, comprising:
define a Financial Risk Management (FRM) data model comprising data entities representing cashflow, financial instrument, trade, netting set, counterparty, collateral post, collateral set, market data, credit data, and organization;
organize data entities relationship, including parent-child hierarchical structure of data entities to reflect latest FRM process flow and data representation;
define a set of FRM attributes on data entities;
define a set of time buckets and matrix representation of time bucket-based report format, as used in Liquidity Gap report;
input data into the data model using an input interface configured to map the input data to corresponding attributes of the data entities;
record FV, PV, Market Risk, Credit Risk attributes to cashflow data entity;
identify set of cashflows corresponding to financial instrument, trade, netting set, counterparty, collateral post, collateral set, and organization data entities following data model hierarchical structure;
record aggregate sum, or aggregate max for Days Past Due (DPD), of FV, PV, Market Risk, Credit Risk, Liquidity Risk attributes to trade, netting set, counterparty, collateral post, collateral set, and organization data entities based on parent-child hierarchical structure of data entities.

4. A computer program product comprising a non-transitory computer-readable medium storing instructions that, when executed by a processor, cause the processor to:
derive cashflow data entity information from financial instrument data entity;
categorize cashflow based on fixed or stochastic nature of cashflow's amount or future value (FV) and time to maturity/settlement attributes;
transform cashflow with stochastic nature on FV or time to maturity/settlement attributes into discretized fixed cashflow;
categorize cashflow based on its payoff function into linear cashflow or non-linear cashflow;
calculate FV, present value (PV), Delta, Vega, Gamma, PV01, Convexity, and Delta FV derived information from cashflow data entity as Market Risk attributes using information from market data entity;
calculate EL, DPD derived information from cashflow data entity as Credit Risk attributes using information from credit data entity;
calculate Liquidity Gap as aggregate sum of FVs of a cashflows set, as a Liquidity Risk attribute; and
calculate aggregate sum, or aggregate max for DPD, of PV, Market Risk, Credit Risk attributes of a cashflows set as identified to correspond with trade, netting set, counterparty, collateral post, collateral set, and organization data entities based on parent-child hierarchical structure.

5. The method of claim 1, wherein data structure is defined:
presenting clear data lineage for tracking the origin, transformations, and flow of data;

6. The method of claim 1, wherein data structure is defined:
enables simultaneous multi-dimensional information of Credit Risk, Market Risk, and Liquidity Risk attributes from cashflow data entity, up to organization data entity, by means of aggregation along the data entity hierarchy;

7. The method of claim 1, wherein data structure is defined:
enables aggregation across product types, asset classes, and business lines for various FRM operations, accounting, and regulatory requirements purposes.

8. The method 2, calculation defined cashflow-based FRM data model comprising:
enables FRM that support wide range of financial instruments and financial accounts with linear or non-linear FV, as well as stochastic/non-stochastic in nature;

9. The method 2, calculation defined cashflow-based FRM data model comprising:
ensuring consistency of market data and credit data used in FV, PV, Market Risk, Credit Risk, and Liquidity Risk calculation and attributes; and
ensuring consistency of FV, PV, Market Risk, Credit Risk, and Liquidity Risk calculation methodology across data entities in the data entity hierarchy.

10. The server and database system of claim 3, wherein FRM data model is implemented comprising:
reducing manual work of data mapping, reconciliation, and aggregation, through clear and coherent data flow in a single data repository;

11. The server and database system of claim 3, wherein FRM data model is implemented comprising:
reducing number of databases and internal network traffic through centralized structured data repository; and
reducing number of external network channels by introducing a single server for FRM activities.

12. A computer program product comprising a non-transitory computer-readable medium storing instructions that of claim 4, further comprising:
reducing manual work from of data mapping, reconciliation, and aggregation through clear sum or max operations in data aggregation across data entities;

13. A computer program product comprising a non-transitory computer-readable medium storing instructions that of claim 4, further comprising:
reducing repetitive calculation of similar concept or formula applied on different data entities through centralized computer program;
reducing validation of repetitive formula implemented on different systems through centralized computer program supporting wide range of products;

14. A computer program product comprising a non-transitory computer-readable medium storing instructions that of claim 4, further comprising:
reducing subscription and maintenance cost of multiple silo-based systems with a single cross-silo system;
enabling other cross-system capabilities due to structured data model and data flow processes to support direct interface through Application Programming Interface (API);

15. A computer program product comprising a non-transitory computer-readable medium storing instructions that of claim 4, further comprising:
enabling Market Risk, Credit Risk, and Liquidity risk report in time bucket matrix representation to understand total cashflows underlying risks per time bucket and currency;
ensuring accounting and regulatory compliance through transparent, consistent, and coherent computer program.
